# EUROPEAN PATENT SPECIFICATION

(11) **EP 0 731 949 B1**
(45) Date of publication and mention of the grant of the patent: **23.01.2002**
(21) Application number: 94928554.8
(22) Date of filing: 06.09.1994
(51) Int. Cl.: G06K 7/01, G06K 7/10, G06F 17/00, G07F 7/00, G07F 19/00

(54) **A COMPUTER IMPLEMENTED METHOD AND SYSTEM FOR INTERACTIVE FUNDRAISING ACROSS A DATA PACKET TRANSFERRING COMPUTER NETWORK**
EIN RECHNERGESTÜTZTES VERFAHREN UND SYSTEM FÜR SPENDENERHEBUNG ÜBER EIN DATENPAKETE ÜBERTRAGENDES RECHNERNETZWERK
UNE METHODE ASSISTEE PAR ORDINATEUR POUR INCITER A LA DONATION DANS UN RESEAU D'ORDINATEUR TRANSFERRANT UN ENSEMBLE DE DONNEES ET SYSTEME CORRESPONDANT

(30) Priority: 07.09.1993 US 117909; 28.09.1993 US 127770; 08.02.1994 US 194204; 22.02.1994 US 199072
(43) Date of publication of application: 18.09.1996
(60) Divisional application: 01200702.7
(73) Proprietor: Ziarno, Witold A., Chicago, IL 60632 (US)
(72) Inventor: Ziarno, Witold A., Chicago, IL 60632 (US)
(74) Representative: McCarthy, Denis Alexis
(86) International application number: PCT/US94/09915
(87) International publication number: WO 95/07512

(56) References cited:
- EP-A- 0 484 198
- WO-A-86/03869
- WO-A-90/01199
- WO-A-91/07042
- WO-A-93/14476
- GB-A- 2 223 872
- US-A- 4 454 414
- US-A- 4 722 054
- US-A- 5 055 660
- US-A- 5 221 838
- US-A- 5 294 782

## Description

### Technical Field:

This invention relates to an offering plate for gathering a donation at a religious service; and, more particularly, it relates to an offering plate that gathers a credit card donation, a debit card donation, a cash donation, and an envelope donation, and accepts, stores, and displays information regarding the donation.

### BACKGROUND ART

As is well known, a religious leader is typically assisted in the gathering of a donation and a member of a religious organization in the making of a donation at a religious service through the use of an offering plate.

Older versions of offering plates include woven baskets and plates made of ceramic, precious metal, such as silver, gold or platinum, wood, or other material appropriate to construct a container into which an donation can be deposited. Offering plates made of woven baskets are often referred to as collection baskets.

An offering plate is brought to a member during a religious service by an usher or circulated among members of a congregation. A member of the congregation then drops a donation onto the offering plate. A donation is most often in the form of cash or check. Frequently, donations contained within an offering plate are then deposited into a larger donation container. The larger container is then taken from the religious service for off-site processing. This type of oblation is herein called "manual, post-processed cash oblation."

A major problem of manual, post-processed cash oblation exists if the member only has with him a bill that is smaller than the bill the member prefers to donate. The member may choose to donate the smaller bill, i.e. one dollar, even though the member's preference would have been to donate a larger bill, i.e. a five, ten or twenty dollar bill. Consequently, the religious organization loses the difference between the preferred donation and the donation actually made.

A second problem exists if the member has a bill larger than he prefers to donate, i.e. a one hundred dollar bill. The member may choose not to donate the larger bill since his preference would have been to donate a smaller bill, i.e. a five, ten, or twenty dollar bill. There is virtually no convenient way for a member to get change for a larger bill during a religious service.

A third problem is that a member, and at times his entire family, finds himself searching for a bill that is his donation preference prior to a religious service. Many times the member does not find the bill he wishes to donate. In one scenario, the member may choose to donate a bill that is larger than his donation preference. However, more often than not, the member may choose to donate a bill that is smaller than his bill of choice. The religious organization again looses the difference between the preferred donation and the donation actually made. Regardless of whether the bill is larger or smaller than the bill the member prefers to donate, a secondary shortcoming of manual, post-processed cash oblation is that a member's account cannot be credited properly since there is no way to associate a particular cash donation with the member who made it. The member may choose not to donate either the larger or smaller bill since the donation does not carry a tax benefit or help satisfy his donation quota. Consequently, there exists a need for an offering plate that accommodates a member's donation preference, allows the member to obtain a tax benefit, and properly credits a member's account so that the member can meet a donation quota.

A newer version of manual, post-processed cash oblation has been developed that utilizes a donation envelope into which a cash or check donation is deposited. The donation envelope is generally a paper envelope that contains printed material including a member code, a space for marking the amount of the donation, and the date of the service attended. These features of the envelope allow for the member's account to be properly credited. This type of oblation is herein called "envelope assisted manual, post-processed cash oblation." A shortcoming of envelope assisted, manual, post-processed cash oblation occurs if a member forgets to bring his donation envelope with him to a service. If the member forgets to bring his donation envelope and instead donates cash, his account, as previously discussed, cannot be properly credited. Moreover, even if envelope assisted manual, post-processed cash oblation is utilized, a shortcoming of this type of oblation is that crediting the donation to a member's account is labor intensive. The religious organization must manually process each envelope to properly credit the particular member's account. This processing generally includes a clerical staff member or group of volunteers who must open each envelope to determine the size of the cash donation within the envelope, and/or record the information located on the cover of the envelope, to properly credit the donation to an account of a member. If the congregation contains several thousand members, this form of oblation might involve several days of processing. Hence, there exists a need for an offering plate that automatically credits a member's account.

A serious problem with both manual, post-processed cash oblation and envelope assisted manual, post-processed cash oblation occurs if a member has with him no cash but has either a debit card or credit card. In this scenario, the member is foreclosed from contributing a donation since an offering plate cannot accept a debit card donation or credit card donation. Hence, there exists a need for an offering plate that allows a member to make a debit card donation or credit card donation and thereby increases the number of donations received by a religious organization by accepting debit card or credit card donations rather than simply cash or check donations.

As is well known, a further problem with manual, post-processed cash oblation and envelope assisted manual, post-processed cash oblation is that it requires manual off-site tallying of individual donations. As such there is a need for an offering plate that tallies an individual member's donations and a plurality of donations made by different members.

WO-A-9 314 476 discloses a device for making and collecting donations. The device is designed to associate a donor who is identified using an encoded card with an inputted currency amount. The device is primarily designed for electronic transactions and does not provide for cash, cheque or envelope donations, which restricts the type of donation receivable.

GB-A-2 223 872 discloses a cash collection device that only provides for coin donations. The device does not provide for any other type of financial donation and does not associate an individual with a donation. It is sometimes useful to associate a donation with an individual where certain Church dues must be paid.

WO-A-9 107 042 discloses a portable automated teller machine which requires a telephone handset to operate. The system is used for exchanging information with a users bank computer. The system is not designed for Charitable donation and is unable to accept cash donations or other types of financial donations such as cheques.

WO-A-9 001 199 discloses a transaction recording apparatus for inputting sales information and storing the information on a removable memory module. The apparatus operates as a point of sale device which has a credit card reader attached. The apparatus is a stand alone unit and is not designed to communicate with other units. Information is transferred by removing the memory module from the apparatus, this means that information can not be communicated in real time. The apparatus is not designed to solicitate for charitable donations or other fund raising schemes.

US-A-4 722 054 discloses an input system for point of sales terminals. The system has a magnetic card reader section for inputting customer data and a transmitting section for sending the information in response to a request for data from the POS terminal. The system is primarily used to authorise a credit card transaction and is not designed to solicitate or receive charitable donations.

EP-A-0 484 198 discloses a portable payment network system. A wireless communications interface is used to electronically communicate information about a financial transaction. The information is transmitted in code to maintain confidentiality between customers and a merchant. This system is directed towards financial business transactions and is unable to accept cash or other types of transactions such as cheques. The system is therefore not suitable for charitable fund-raising uses.

US-A-4 454 414 discloses a fund transfer system for transferring funds in lieu of cash. The system comprises a portable module into which information is entered relating to a transaction. The information is transmitted to other units or directly with a financial institute using optical transceivers. This type of communication system requires a user to bring their portable module to a corresponding receiving unit in order to transmit information, this makes the system very restrictive. The system is also unable to accept cash or cheque transaction as it is primarily designed for electronic transaction.

It would be highly desirable to solve the variety of problems enumerated above facing members of the clergy, and members of religious organizations in gathering an envelope containing a cash donation, a credit card donation, and a debit card donation through the use of an offering plate and offering plate system which accommodates a variety of donation preferences.

It is yet another object of the present invention to provide an offering plate and offering plate system that can collect, analyze, and display statistical information associated with an individual donation or a plurality of individual donations and provide useful quantitative data. It is believed that the present invention will facilitate both free will offerings and tithes.

### SUMMARY OF THE INVENTION

These and other objects of the present invention are achieved in an offering plate and an offering plate network. The present invention provides an offering plate and offering plate network containing a credit card donation processor and/or a debit card donation processor, tallying the amount of card donations accepted, and collecting, analyzing, and displaying statistical information regarding the donation.

The present invention also provides an offering plate and offering plate network for accepting an envelope containing a cash donation, tallying the cash donation within the envelope and within a plurality of envelopes, crediting a member's account, and collecting, analysing, and displaying statistical information regarding the donation.

The present invention also provides a method of for obtaining donations at a religious place. These and other objects will become, apparent in the course of a detailed description of the invention.

### BRIEF DESCRIPTION OF THE DRAWINGS

FIG. 1 is an overall system configuration of an offering plate network according to the present invention.
FIG. 1a is a general schematic block diagram of an embodiment of an exemplary offering plate system of the present invention.
FIG. 1b is a flow chart illustrating the functionality of an optional donation communication servicing software.
FIG. 1c is a flow chart illustrating the functionality of an optional tallier servicing software.
FIG. 1d is a flow chart illustrating the functionality of optional software for executing an exemplary donation session.
FIG. 2 is a perspective view of a bar coded envelope, an embodiment of an offering plate with an envelope donation acceptor, and a clergy member's terminal.
FIG. 3 is a perspective view of offerings and an embodiment of an offering plate with a card donation processor, a key pad, and a surface for accepting cash, check, or envelope donations.
FIG. 4 is a schematic block diagram of an offering plate with various additions.
FIG. 5 is a perspective view of a portable offering plate, a docking station, and a container for gathering cash and envelope donations.
FIG. 6 is a perspective view of an offering plate, a docking station, a surface for collecting cash and envelope donations, and a means for lockably securing an offering plate.
FIG. 7 is a top plan view of a user interface.
FIG.S 8, 8a and 8b are top plan views of various prompts for use with an offering plate.
FIG.9 is a perspective view of of an envelope/ deposit box with a docking station.

### DETAILED DESCRIPTION OF THE INVENTION

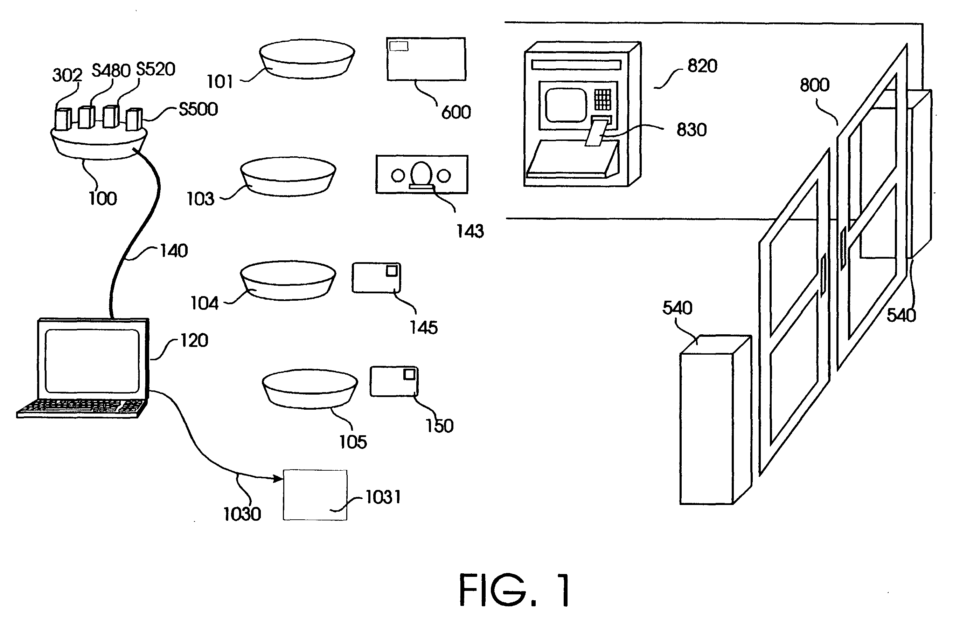

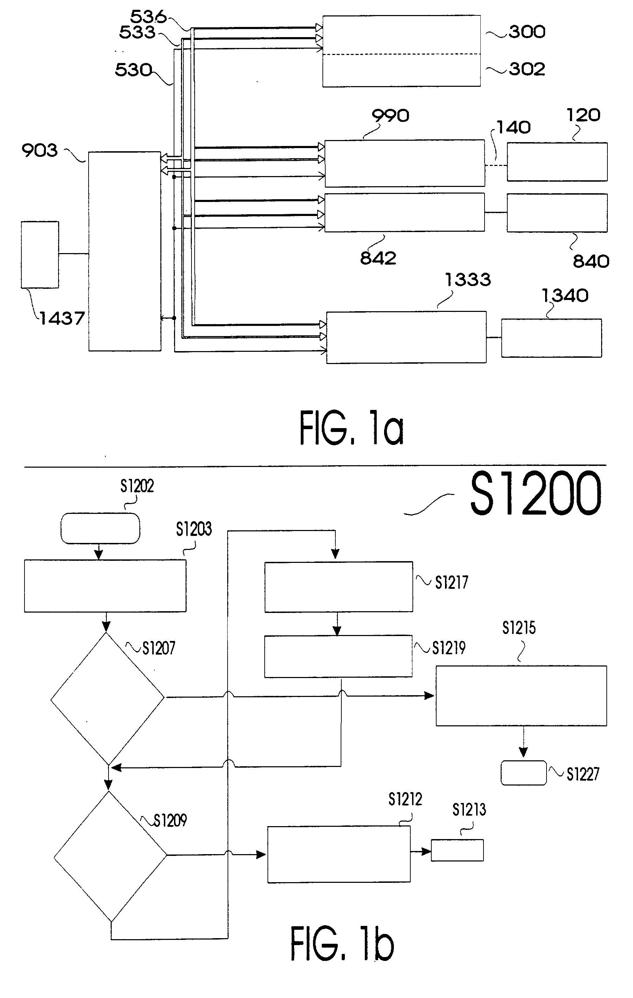

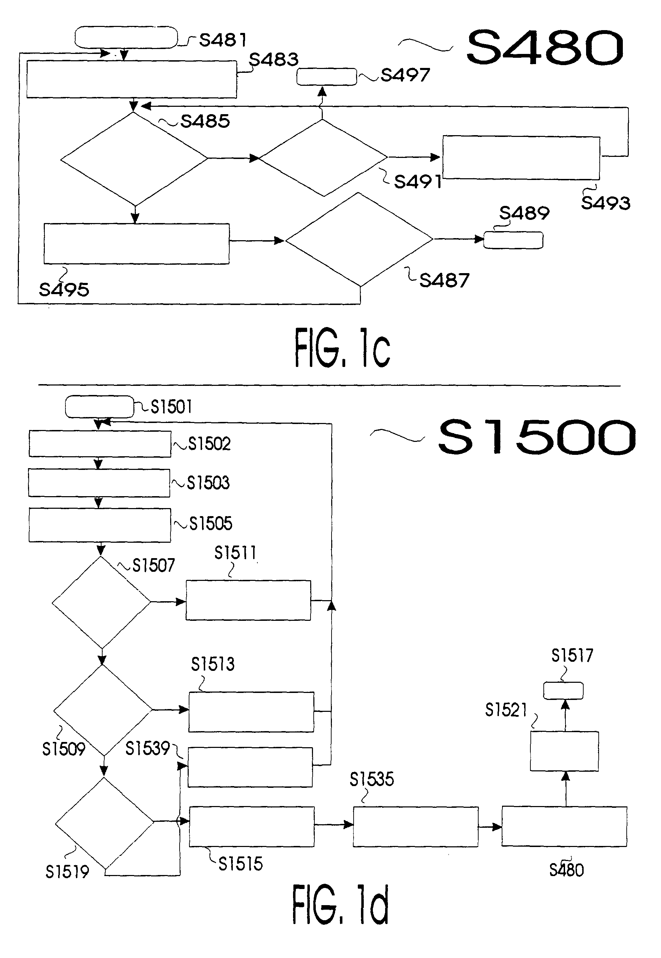

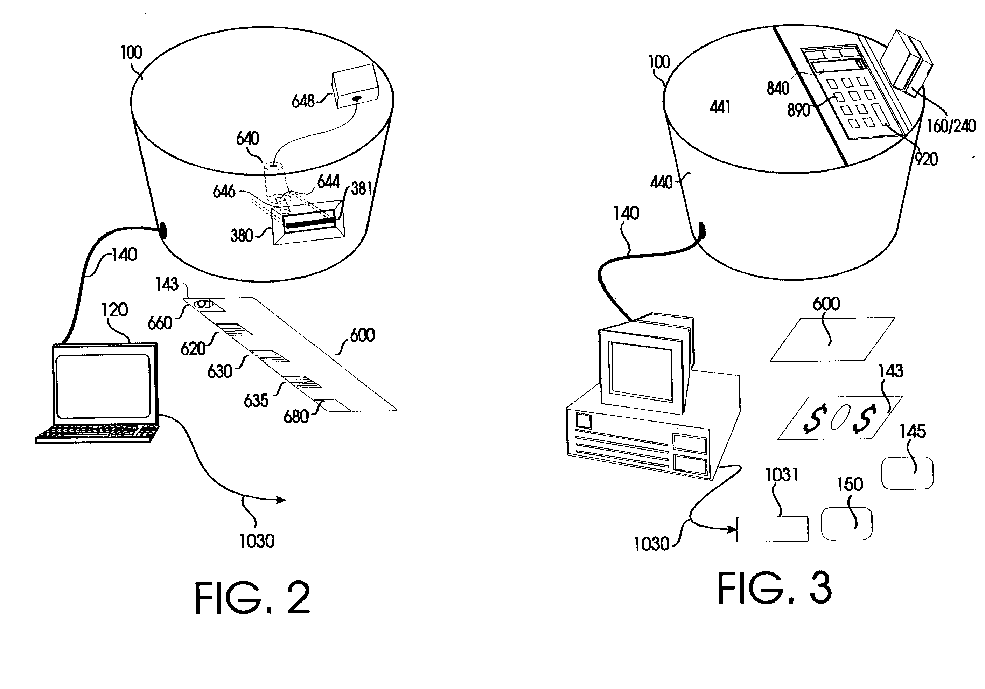

FIG. 1 is an overall configuration of an offering plate network according to the present invention. An offering plate 100 is used by a member of the clergy at a religious service, and the like, to gather a donation. As used herein, the term "offering plate" means a device that is used to gather a donation at a religious service or charitable function; the term "portable offering plate" means a device that is used to gather a donation at a religious service or charitable function, and which may be passed from one member or attender of the congregation to another during a service or charitable function; and, the term "stationary offering plate" means a device that is used to gather a donation and is fixed or releasably fixed to a stationary object. An offering plate may also be used by a charitable institution for gathering an offering. As used herein, the term "member" also refers to an "attender." In one embodiment, offering plate 101 gathers an envelope 600 donation (FIG. 1 and 2). In a second embodiment, offering plate 103 gathers a cash donation 143. Offering plate 104 gathers a credit card 145 donation. In a fourth embodiment, offering plate 105 gathers a debit card 150 donation. Offering plate 100 generically refers to offering plates 101-105.

Information bearing cards are used for making donations. As used herein, the term "credit card" refers to all forms of credit cards including, by way of example, VISA, Mastercard, and Discover. As used herein, the term "credit card" also refers to an American Express card. Moreover, as used herein, the term "debit card" refers to all forms of debit cards including, by way of example, a Cirrus card, a Plus card, a Maestro card, an Interlink card, and any other type of card that can be used for an electronic fund transfer. The term "card" also contemplates a private label card issued or maintained by a religious organization or an affiliate of a religious organization, and a prepaid card that can be purchased by cash, check, credit, or debit cards.

By way of further example, in an embodiment, offering plate 100 contains a card processor 160/240 that processes, and a card reader that reads, smart cards, e.g. PCMCIA cards, JEIDA/PCMCIA compliant memory cards, IC cards, GEC Card Technology LTd. IC cards, West Midlands, U.K. and/or Gemplus Card Services memory and microprocessor cards. The present invention also contemplates the use of contactless IC cards, e.g. such as those available from Mitsubishi Electric UK Ltd., Hatfield UK, and Oakwood design, Letchworth UK, and the like. Other forms of information bearing cards are also used with offering plate 100.

Generally, offering plate 100 accepts a cash donation 143, an envelope 600 containing a cash donation, a credit card 145 donation, and/or a debit card 150 donation. Offering plate 100 collects and provides information about a member and a donation. In one embodiment, offering plate 100 is portable unit. Using a communication link 140, preferably an RF (radio frequency) communication link, an infra-red or communication link or other free-propagating electromagnetic energy communication link, offering plate 100 communicates the information about the member and the donation to a clergy member's terminal 120 in one embodiment. As used herein, the term, "clergy member's terminal," refers to a terminal that can be used by anyone including but not limited to a clergy member, as for example, a secretary, clerk, volunteer, or an accountant.

In an alternate embodiment, the offering plate 100 first stores the information about the member and the donation it has accepted in a data storage 302, and then at a latter time communicates it to the clergy member's terminal 120 via communication circuitry 990 (FIG. 1a) and a communication link 140, e.g. after a single service or after a full day of services. The clergy member's terminal 120 might be located on-site or at some remote location. The clergy member's terminal 120 then communicates the information about the member and the donation via a communication link 1030, which by way of example, might include a telephone hookup, with a card account processor, or the like. By way of example, a card account processor includes a funds processing network, third party card processor, a bank, and the like. In another embodiment, offering plate 100 communicates information about the member and the donation directly via communication link 1030, by way of example, a telephone hookup, thereby bypassing clergy member's terminal 120 to a funds processing database, and the like. The card account of the member of the religious organization is appropriately charged the amount of the donation, or debited for the donation, as appropriate, and the account of the religious organization is augmented respectively.

By way of further example, offering plate 100 contains a credit card donation processor 160, and/or a debit card donation processor 240. Such a processor directly utilizes a cellular communication link, or other standard telephone hookup. Offering plate 100 stores a member's card account and donation information in data storage 302. After the religious service or a day of services, communication link 1030 is connected directly to the processor 160/240 and/or data storage 302, and communication circuitry 990 via communication link 1030 transfers the member and donation information to a card account processor, and the like. The card account of the member of the religious organization is appropriately charged or debited the amount of the donation and the account of the religious organization is augmented respectively. The donation can be made at an off-line offering plate. In one embodiment, offering plate 100 does nor request an authorization, or pre-authorization, for a donation at the time, or at about the time, a donation is made or attempted to be made. Rather offering plate 100, clergy member's terminal 120, a card account processor, offering plate network, or combination thereof, post processes card information and donation amount information. The term "offertory" means a length of time designated for the gathering of donations during a religious service.

Preferably, at or near an entrance or exit of a place of worship 800 is located a receipt generator 820 for the donation. The receipt generator 820 produces a receipt for a single donation or a plurality of donations. In one embodiment, offering plate 100 communicates, via a communication link, preferably an RF (radio frequency) communication link or an infra-red communication link, with the receipt generator 820. In another embodiment, offering plate 100 communicates donation and member information, via a communication link to clergy member's terminal 120. Clergy member's terminal 120 then communicates the member and donation information to receipt generator 820. The communication consists of information about the member, the donation, the date, the collection for which the donation was given, and the like. Upon receipt of the communication, the receipt generator 820 processes the information about the member and the donation to generate a receipt 830. The receipt 830 may be generated automatically by the receipt generator 820 to be picked up by the member or attender after the service, or may be generated at the request of the member or attender after the service as the member is leaving the place of worship, or may be generated for mailing or faxing to the member or attender. A member of a religious organization may desire the receipt 830 for tax purposes or for determining if the member is meeting a donation quota. The present invention also contemplates locating the receipt generator 820 on offering plate 100, and generating receipt 830 at offering plate 100.

In one embodiment, theft deterrent 540 is located at or near an entrance or exit of a place of worship 800 to deter the theft of offering plate 100. Many theft deterrents are well known in the art. By way of example, systems frequently used in retail stores might be used. The present invention contemplates that offering plate 100 contains a device that can be detected by theft deterrent 540. As such, if someone attempts to unlawfully take offering plate 100 through the entrance or exit of a place of worship 800, an alarm, or the like, might sound.

The present invention includes an optional tallier service routine S480, a set of software routines which run on offering plate 100 to tally a plurality of donations, in offering plate 100 in one embodiment. In an alternate embodiment, service routine S480 is located within clergy member's terminal 120. The service routine S480 tallies a credit card 145 donation, a debit card 150 donation, a cash donation 143, an envelope 600 containing a cash donation, and combinations thereof. Moreover, service routine S480 performs a number of arithmetic functions including but not limited to, by way of example, addition, subtraction, multiplication, division, as well as a statistical calculation. Service routine S480 is connected to commercially available accounting programs in one embodiment.

In conjunction with a printer, offering plate 100 and/or clergy member's terminal 120 may be used to generate a report commonly used for accounting purposes via service routine S480, including but not limited to a summary of total donations generated, a monthly statement, a histogram, a donation average per member, sub-group of members, or group of members.

The offering plate network of the present invention, which includes the offering plate 100, a clergy members's terminal 120, a card account processor, or combination thereof, collects, analyzes, and displays statistical information associated with an individual donation or a tally of individual donations. Offering plate 100 contains an optional statistical information collecting routine S500, a set of software routines which run on processing circuitry 903 (FIG. 1a). In an alternate embodiment, the statistical information collecting routine S500 is located in the clergy member's terminal 120. The statistical information collecting routine S500 collects donation data from the donation reader 1340 and associated circuitry 1333 (FIG. 1a), and communicates it to storage 302 (FIG. 1a). A statistical information analyzing routine S520, a set of software routines which run on offering plate 100 located within the offering plate 100 in one embodiment, or in the clergy member's terminal 120 in an alternate embodiment, then retrieves donation data from data storage 302 and performs arithmetic and statistical calculations thereon.

There are various types of statistical information that can be associated with a donation, and analyzed by statistical information analyzing routine S520. By way of example, one measure of the effectiveness of a particular sermon or the performance of a particular minister might be the amount of donations generated at a single service or a plurality of services. By way of further example, the particular donation habits of a member or group of members might be an indicator of the particular member, sub-group, or group of members a religious organization must target in order to maximize donations. Offering plate 100, in one embodiment, or the clergy member's terminal 120, in another embodiment, generates a report measuring the effectiveness of a sermon or a minister, the donation habits of a member or a group of members, and the number of members as measured by the number of donations given, via the above described statistical information analyzing routine S520, and associated hardware. Routine S520 might also include an interface with a commercially available computer program, a customized accounting computer program, and/or a statistics computer program.

FIG. 1a is a general schematic block diagram of the offering plate of one embodiment of the present invention which includes a donation reader 1340, donation reader circuitry 1333, power source 1437, and communication circuitry 990. Although display circuitry 842 is shown in this general embodiment of the invention, display 842 is optional.

In the present embodiment, processing circuitry 903 includes a microprocessor. However, multiple microprocessors, or a plurality of dedicated microprocessors may also be used. Processing circuitry 903 and associated circuitry are powered through power source 1437. Processing circuitry 903 interfaces with associated circuitry via an address bus 536, data bus 533, and control bus 530. Specifically, upon detection by the donation reader 1340 that a donation is being made, donation reader circuitry 1333 interrupts processing circuitry 903. Circuitry 903 responds to the interrupt by reading the buffered donation information. Circuitry 903 then stores the donation information in storage 302. In one embodiment, circuitry 903 also adds the new donation information to a running total of donation information stored in storage 302.

A variety of links and associated circuitry are used in the present invention. By way of example, link 140 is a serial link and associated circuitry in one embodiment, an RS-232 link and associated circuitry in another embodiment, modem circuitry in communication with circuitry 990 in yet another embodiment, or an RF or infra-red link and associated circuitry in another embodiment.

A variety of additions, can be added to the embodiment of processing circuitry 903 illustrated in FIG. 1a. By way of example, a cash donation reader and associated circuitry, a keyboard and associated circuitry, a touch sensitive screen and associated circuitry, a bar code reader and associated circuitry, an optical character recognition reader and associated circuitry, an electronic signature line and associated circuitry, a fingerprint scanner and associated circuitry, a card reader and associated circuitry, a coin reader and associated currency, and a bill dispenser and associated currency, and combinations thereof can be added.

The clergy member's terminal 120 drives a printer in one embodiment to produce a hard copy of a report representing data sent to terminal 120 via communication circuitry 990 located in offering plate 100. In another embodiment, service routine S1200 (FIG. 1b), runs on processing circuitry 903 located in offering plate 100. Processing circuitry 903 communicates member and donation information to communication circuitry 990 which drives a printer to print out data via a wired link, for example, an RS-232 cable. Similarly, offering plate 100 can use a serial link to drive a printer directly via communication circuitry 990.

Display circuitry 842 includes a buffer and LED drive circuitry which processing circuitry 903 can write information into in one embodiment. Display circuitry 842 responds to data written into the buffer by displaying that information via control bus 530.

Donation reader 1340 and associated circuitry 1333 includes a credit card processor, a debit card processor, a currency validator, a currency discriminator, a currency acceptor, a coin discriminator, a coin validator, a bar code scanner, or combinations thereof.

Moreover, power source 1437 is a battery power source in one embodiment. Power source 1437 is a portable rechargeable power source in another embodiment. Preferably, the battery is a rechargeable source, and is located on the offering plate 100 so as to be easily accessible during replacement or recharging thereof. In another embodiment, power source 1437 includes a hardwired power supply.

FIG. 1b is a flow chart illustrating the functionality of an optional donation communication servicing software and associated hardware of an exemplary offering plate of the present invention. Optional donation communication circuitry servicing routine S1200 is a set of software programs which run on offering plate 100. Routine S1200 is entered when a communication is received by communication circuitry 990 in one embodiment. Upon entering this routine (S1202), communication circuitry 990 enters a retrieve the communication routine S1203 to retrieve the communication. The communication consists of a request for donation information in one embodiment. By way of example, the request includes a request for a cash donation entry, an envelope donation entry, a bar code data entry, a card entry, a donation entry, or combinations thereof. In yet a further embodiment, the request might include a request for a fingerprint entry, a donation entry, or a combination thereof. In another embodiment, the communication is a request to download. The circuitry 990 then tests to determine if this is a request to download by executing routine S1207. If yes, then a test to determine if the data storage is empty using routine S1209 is conducted. If yes, an end of data message using routine S1212 is sent, and routine S1200 is concluded (S1213).

If there was a no in response to routine S1207, routine S1215 is executed. Routine S1215 transmits a please resend request to download message, and then ends (S1227) routine S1200. In one embodiment, the request to download may include a security code or other security information. Furthermore, the circuitry 990 may test to see if the proper security code is present within the request to download before downloading any information.

If there was a no in response to routine S1209, routine S1217 is executed to obtain the donation entry. The donation entry can come from the cash donation acceptor 320, the envelope donation acceptor, card donation processor 160,240, or coin donation acceptor 1100, or storage 302. Routine S1219 to send the donation entry is entered. Routine S1219 loops around to routine S1209 until there is no more data to be communicated. Routine S1200 is entered when there is communication between offering plate 100 and clergy member's terminal 120 in one embodiment. In an alternate embodiment, routine S1200 is entered when there is communication between offering plate 100 and a printer. In yet another embodiment, routine S1200 is entered when there is communication with a card account processor, e.g. third party card processor, and the like.

In an embodiment, a plurality of donation data, comprising card information from an information bearing card and associated numerical donation amount information are grouped together. The grouped information is then transmitted to a card account processor. The card account processor authorizes a sub-group of donation data for further processing. Optionally, the authorized and unauthorized donation data are transmitted to offering plate 100, clergy member's terminal 120, a religious organization database, or combination thereof for exclusion of the unauthorized donation data. The unauthorized donation data are excluded from the group, and the authorized donation data, e.g. card information and donation amount information, are transmitted to the card account processor. Means responsive to information sent via the transferring means enters a debit representative of the donation amount information to an account of the attender. Means responsive to information sent via the transferring means enters a credit representative of the donation amount information to an account of an organization.

FIG. 1c is a flow chart illustrating the functionality of an optional tallier servicing routine S480 and associated hardware of an embodiment of an offering plate of the present invention. Routine S480 is entered (S481) in order to tally a plurality of donations, which may be stored in the data storage 302 along with associated member information. An entry is read from storage 302 via routine S483. The entry is then tested to determine if the entry is a donation to be tallied by routine S485. By way of example, donations that are tallied include cash donations 143, envelope donations 600, credit card 145, and debit card 150 donations. If a yes is given in response to routine S485, then the entry is added to a register by routine S495. In one embodiment, routine S495 contains subroutines that pigeon hole a cash donation 145 entry into one register, an envelope 600 donation entry into another register, a credit card 145 donation entry into yet another register, and a debit card 150 donation entry into yet another register. Each respective register has a particular type of entry added, or a combination thereof, and then routine S487 is executed in one embodiment. In another embodiment, there is only one register to which each type of entry is added, then routine S487 is executed. Routine S487 tests to determine if the data storage is empty or if the last data entry has been read. If yes, routine S480 ends (S489). If no, there is a loop back and routine S483 reads the next entry. If no is the answer to routine S485, routine S491 tests to see if the data storage is empty. If yes, routine S480 is concluded (S497). If no, routine S493 reads the next entry in data storage 302 and loops back to routine S485.

FIG. 1d is a flow chart illustrating the functionality of optional software and associated hardware for executing a donation session. By way of example, optional routine S1500 may be entered (S1501) whenever a donation, or member information, is detected by donation reader 1340 (FIG. 1a) by any other addition, e.g. keyboard 107 or a touch sensitive screen, or combinations thereof. Routine S1502 waits until an entry is detected by a reader or addition. Routine S1503 reads the entry. Routine S1505 adds the entry to session information. Routine S1507 tests to determine if the session information contains a donation amount. Exemplary donation amounts are a cash donation 143 entry indicating the denomination of a bill, keyboard 107 entry indicating a donation amount, a bar code 630 (FIG.2) entry indicating a donation amount, a coded envelope entry indicating a donation amount, a coded card entry indicating a donation amount, or a combination thereof. If no, routine S1511 requests a donation amount and S1511 loops around to Routine S1502. In one embodiment, routine S1511 displays a message for a time out period. Routine S1511 can involve a single screen or multiple screen display depending on the type of entry device used. If the test of routine S1507 results in a yes, routine S1509 is executed. Routine S1509 determines if the session information contains member information. By way of example member information includes a member bar code 620 (FIG. 2), a code associated with a member entered via keyboard 107, member information on a coded envelope, member information on a card, a fingerprint of a member, or a combination thereof. If no, routine S1513 requests member information and loops back to routine S1502. If yes, Routine S1519 is executed and determines if the session information contains both member and donation information. If yes, routine S1515 associates the member and donation information. In one embodiment, Routine S1535 stores the associated member and donation information. In another embodiment, optional tallier service routine S480 is executed. Routine S1521 clears the session information. Routine S1500 ends (S1517). If the result of routine S1519 is no, routine S1539 requests donation amount and member information and loops back to before Routine S1502. Again, this routine may involve single or multiple screens depending on the input device.

In one embodiment, optional service routine S480 communicates information regarding the total amount of cash donations 143 gathered via communication link 140, preferably an RF (radio frequency) communication link or an infra-red communication link, to the clergy member's terminal 120 for further processing as will be discussed below.

The present invention contemplates that a member attending a church service located in a part of the country other than his regularly attended church service might have his religious organization account credited in his regularly attended church. The advantage of this feature will be readily apparent to members who frequently travel on business or pleasure.

Generally in all embodiments where a keyboard is present, keyboard circuitry 109 scans keyboard 107 to determine if a key has been hit. Keyboard 107 refers to both keypad 890 and entry key 920, or combination thereof. Key board 107 might include a cancel key, and keys with other alpha-numeric text. In another embodiment, keyboard 107 might contain a key that represents a specific denomination amount, e.g. five dollars ($5) or ten dollars ($10). Processing circuitry 903 interfaces with keyboard 107 and associated circuitry 109 via an address bus 536, data bus 533, and control bus 530. Once a key has been hit on keyboard 107, that key information is moved into a buffer and interrupts processing circuitry 903 to communicate that the key is ready. Circuitry 903 responds to the interrupt by reading the buffered keyboard information. Circuitry 903 then stores the keyboard information in storage 302 if necessary. By way of further example, the keyboard information may consist of a donation amount, an account number of a member, an authorization code, and the like.

FIG. 2 is a perspective view of an embodiment of an offering plate with an envelope donation acceptor 380. A member of a religious organization feeds an envelope 600 containing a cash donation into slot 381 forming part of the envelope donation acceptor 380. As used in relation to this figure the term "cash donation" also includes a donation by check. The envelope donation acceptor 380 takes in the envelope 600 containing a cash donation. This can be accomplished by pulling in envelope 600 containing a cash donation in by a transport mechanism such as that commonly encountered in vending machines, and as previously described. Alternatively, a member may manually insert the envelope 600 containing a cash donation through slot 381.

A donation associator allows a member's account to be properly credited for the donation. By way of example, the present invention contemplates that a donation associator for associating an envelope containing a cash donation with an account of a member may take on several forms, including but not limited to a bar code, e.g. 620, and bar code reader 640 and associated circuitry, an optical character recognition reader and associated circuitry, or a combination thereof. The present invention further contemplates using a reader that reads a coded envelope.

In one embodiment, the envelope 600 containing a cash donation may contain a member bar code 620 that is associated with information about a member's account. The envelope 600 containing a cash donation may also contain a bar code representing a cash denomination 630, and/or a collection bar code 635. By way of example, a collection bar code 635 is used to designate the specific collection to which a donation is made if there are multiple collections during the same religious service. By way of further example, the member bar code 620 may be associated with the member's account.

In one embodiment, the religious organization may choose to give a member an envelope containing only a member bar code 620 imprinted on envelope 600. The present invention contemplates that the member can then add an adhesive label containing a bar code representing a cash denomination 630 to envelope 600. Moreover, on the occasion of a special collection, a member can add an adhesive label containing a collection bar code 635 which can be affixed onto envelope 600. The present invention also contemplates that other information can be associated with a bar code which can be affixed on envelope 600. By way of example, a bar code can be associated with a special religious prayer request, and the like, or associate with a donation in memory of a deceased individual.

If bar codes are used on envelope 600, a bar code reader 640 reads, by way of example, the member bar code 620, and communicates information to bar code reader circuitry 648 where it is stored. The present invention also contemplates that a bar code reader 640 reads information from a collection bar code 635 and a bar code associated with a cash denomination 630. In one embodiment, bar code reader 640 and bar code reader circuitry 648 communicates this information to the clergy member's terminal 120 via communication circuitry 990 and communication link 140 or to processor 903 for processing, e.g. via service routine S480. In another embodiment, the clergy member's terminal 120 communicates this information via communication link 1030 to a central database where a plurality of donations might be processed from individual religious organizations, e.g. 50 individual churches belonging to one religious denomination.

Numerous bar code readers are commercially available from vendors at a comparatively low price. By way of further example, a bar code reader might be an ordinary pen-type bar code reader. Since the construction and operation of types of bar code readers are well known, a detailed description is omitted.

Additionally, a transparent film 680 might cover opening 660. As used herein, the term "transparent film" refers to any material through which a denomination or other distinguishing feature of a bill can be recognized, including a translucent material. The present invention further contemplates that the envelope 600 containing a cash donation may be entirely made out of a material that is transparent.

Although the exemplary described embodiment incorporates a pen type bar code reader, the offering plate 100 might incorporate any type of data gathering device equipped with a bar code reader.

The present invention contemplates that a member may wish to make a donation that includes a plurality of cash donations 143. By way of example, a member may wish to donate $36. The member inserts a cash donation 143 including a one dollar, five dollar, ten dollar, and twenty dollar cash donation into separate compartments within envelope 600.

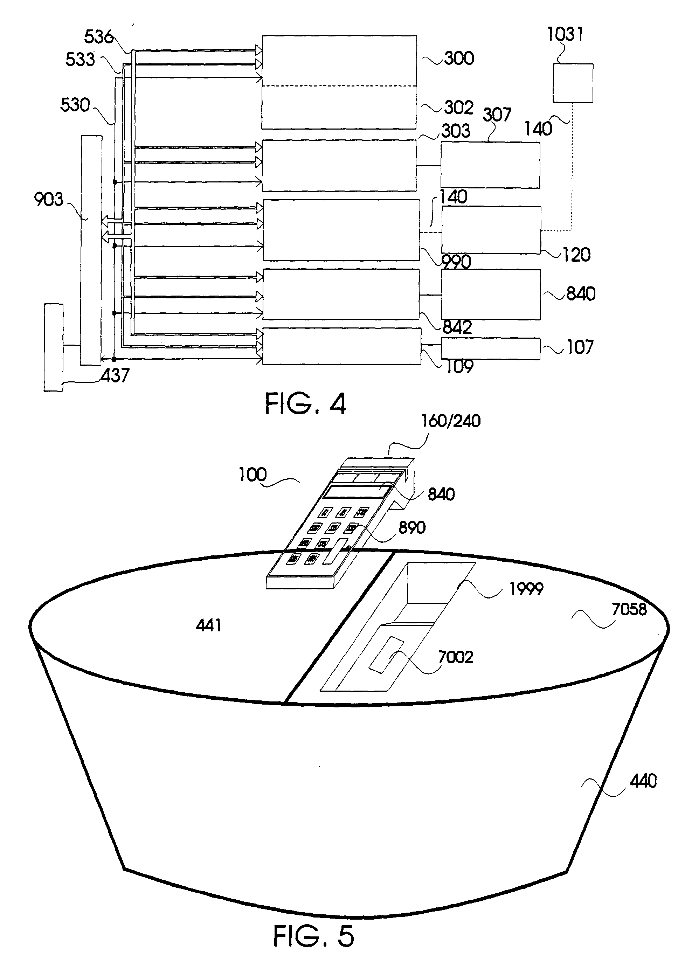

FIG. 3 and 5 are perspective views of embodiments of an offering plate 100 with a card processor. A card processor may be a credit card donation processor 160 and a debit card donation processor 240, e.g. processor 160/240. The present invention contemplates that offering plate 100 might only contain a credit card donation processor 160. Alternatively, the present invention also contemplates that offering plate 100 might only contain a debit card donation processor 240. In yet a further embodiment, the present invention contemplates that both a credit card donation processor 160 and a debit card donation processor 240 might be located on offering plate 100 at different physical locations.

In one embodiment, card processor 160/240 includes a card slot defining member which defines a card slot. A member swipes or passes a credit card 145 through the card slot of a credit card donation processor 160. Alternatively, a member swipes a debit card 150 through a card slot of a debit card donation processor 240. Moreover, as used herein, the term "card donation processor" when used without the descriptors "credit" or "debit" refers to either a credit card processor, debit card processor, or both a credit and debit card processor.

In a preferred embodiment, offering plate 100 has both a credit card donation processor 160 and a debit card donation processor 240 utilizing a single processor that discriminates between the type of donation made. An exemplary credit and debit card processor 160/240 is disclosed in United States Patent No. 5,012,077.

In one embodiment, the card donation processor 160/240 communicates with key pad 890. Upon receiving the communication that a card donation is to be given, key pad 890 reveals a key associated with a cash denomination. By way of example, the key associated with a cash denomination might appear to disclose a one, five, ten or twenty dollar symbol as described below. The member presses the key associated with a cash denomination that is the preferred amount of his donation, and presses entry key 920.

It will be appreciated that most credit card 145 donation amounts will not require an authorization by signature or numeric code. Consequently, in one embodiment, the present invention contemplates that a member will simply need to swipe or insert an information bearing card 145/150 through, or into, card processor 160/240, as required, and enter the amount of his donation by pressing a key associated with a cash denomination in making his donation on key pad 890. In an alternate embodiment, the present invention contemplates that a member will have pre-authorized the religious organization to collect a donation amount. Pre-authorization might include an agreement with the organization that a member authorizes the donation of a given amount once a certain action takes place, i.e. the member swipes card 145/150 through card processor 160/240 at offering plate 100.

In the case of a debit card 150 donation via offering plate 100, the member might authorize the religious organization to use a secret identification number associated with his debit card account in order to allow the organization to automatically obtain the donation without seeking subsequent authorization from the member. In this scenario, the member need only perform the action of swiping or inserting, as reqired, card 150 through processor 160/240 on offering plate 100 to make a donation.

The present invention also contemplates that a member might wish not to disclose a member's card 145/150 account authorization code to the religious organization for security reasons but still might wish to make a card 145/150 donation. In this case, the present invention contemplates that the clergy member's terminal 120, or offering plate 100, has an input 307 that allows for entry of the member's card 145/150 account authorization code so that it is encrypted and only decipherable and usable by the clergy member's terminal 120 or offering plate 100 for processing the card 145/150 donation. An advantage of this feature is added security for the member. The present invention also contemplates using a touch sensitive screen to input, a member's name, credit card and/or debit account information, the collection for which the donation is made if there are multiple collections, and the like.

A single or a plurality of associated card 145,150 donations is stored in data storage 302. A set of software routines has first associated a member's card account information with a donation. The member has made a number of card donations within a specified time period which are stored and tallied by a set of software routines. Optional small donation service routine downloads a plurality of a member's card donations once a card donation amount threshold is reached.

By way of example, a member may wish to make a card donation of two dollars weekly. However, a communication charge between an offering plate 100 and a central database card processor, might be relatively expensive and as such would make the transaction cost of processing one two dollar weekly card donation prohibitive. However, once a number of two dollar weekly donations are received, i.e. over a period of two months (sixteen dollars), communication charges might be reasonable for the size of the transaction. Moreover, the longer the religious organization waits to process the donations, the greater the decrease in transaction costs relative to donation size.

Optional Small donation service routine is entered at a convenient interval, by way of example, every week, or every month. A routine reads, and initial, and the next card donation amount for one member from storage. A routine tests to determine if a, single, or the sum, of a plurality of donation amounts is greater than a threshold amount. In one embodiment, a threshold amount is chosen to make the transaction costs of processing a card donation reasonable in comparison to the card donation amount. If yes, the entry is downloaded via a routine. In one embodiment, the entry is downloaded via communication circuitry 990 to a third party card processor, and the like. Another routine is then executed. This routine tests to determine if the end of the donation amount information in storage has been reached for a member. If yes, the routine is concluded. If no, the routine is executed again. In one embodiment, a routine reads a card donation amount for another member.

In one embodiment, key pad 890 can be used to associate a donation amount with an account of a member. As described above, the credit card donation processor 160 communicates with key pad 890. Upon receiving the communication that a card donation 145/150 is to be given through the card donation processor 160/240, or an envelope 600 containing a cash donation is to be given through the envelope donation acceptor 380, key pad 890 reveals a key associated with a cash denomination 900, e.g. a key associated with a cash denomination of five dollars. By way of further example, the key associated with a cash denomination appears to disclose a one, five, ten or twenty dollar symbol. The member presses the key associated with a cash denomination 900, and presses entry key 920. The present invention also contemplates that key pad 890 may contain a key that is also associated with the number of the collection to which a donation is made, and the like.

In another embodiment, the offering plate 100 might adopt pen-based input or touch sensitive screen input. A Pen and screen provide a member a substitute for key pad 890. By way of example, a member may use a pen to write in the amount of donation or other alpha-numeric text on a screen. Alternatively, a symbolic key associated with a cash denomination might appear on a screen. The member then uses his finger to touch the symbolic key associated with a cash denomination and designates the donation amount. If a member's signature is required, a pen can also be used with a screen as an electronic signature line. In one embodiment, the member's signature entered on a screen can be collected, stored, and/or transmitted by card processor 160/240 along with donation information to a third party card processor via a communication link 1030. Alternatively, this information might be sent to clergy member's terminal 120 via communication link 140 for further processing, storage, and/or transmittal via communication link 1030.

FIG. 3 is a perspective view of an embodiment of an offering plate 100 with a card donation processor 160/240. In this embodiment, a container 440 supports a credit card donation processor 160, a debit card donation processor 240, or combination thereof. In yet a further embodiment, the present invention contemplates that both a credit card donation processor 160 and a debit card donation processor 240 might be located on offering plate 100 at different physical locations.

A member drops a cash donation 143 or an envelope 600 containing a cash donation into container 440. Container 440 has an open area 441 on its top surface. Alternatively, open area 441 may be located on a side surface. Area 441 is of a size for receiving a cash donation 143 or envelope 600. The cash donation 143 or envelope 600 containing a cash donation might then be processed using manual post processed cash oblation. Alternatively, a member might make a donation using credit card 145 or a debit card 150 as previously described.

The present invention contemplates that container 440 may be constructed from any material suitable to collect cash donations or envelope donations. Preferably, container 440 is constructed from a woven material, or a metal. Container 440 is of a size and weight permitting an attender at a religious service to pass plate 100 to the attender sitting next to him in the same pew. In an alternate embodiment, container 440 might also be mounted to a pew. The present invention also contemplates using this embodiment in a religious funeral service.

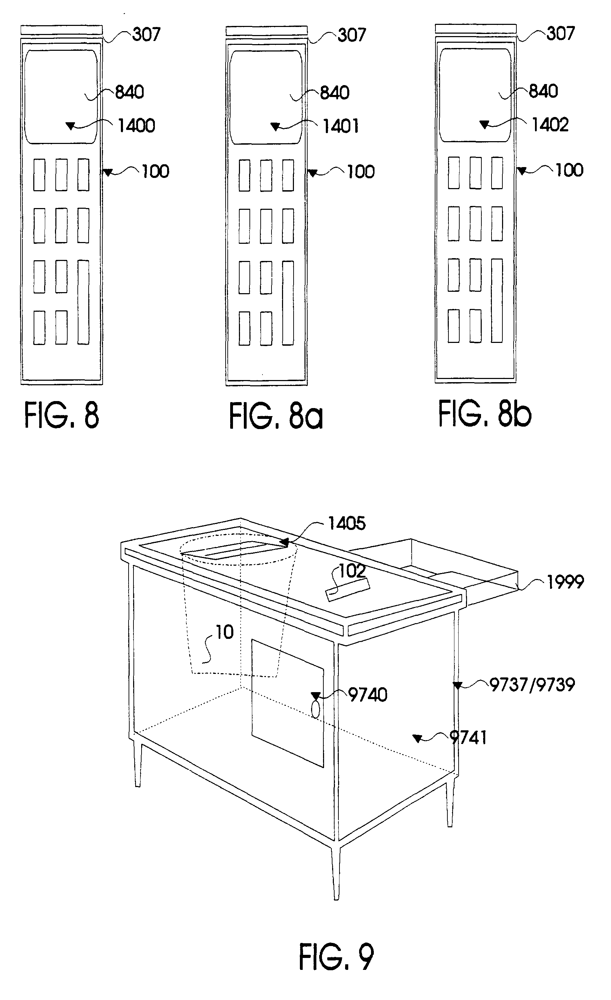

Container 440 can optionally comprise an envelope box 9737 with a locking cash drawer 9740 or a deposit box 9739 (FIG. 9). The envelope box 9737 and deposit box 9739 have optional slot 102 disposed thereon for the deposit of cash 143 and envelope donations 600 and an inner storage volume 9741. Deposit box 9739 may have the addition of an opening baffle 1405 for security, a locked cabinet door 9740 for access said cash donations, and optional removable bag 10 for retaining a cash donation 143 (not shown). In one embodiment, envelope box 9737 and deposit box 9739 comprise docking station 1999, offering plate 100, or combination thereof. Optionally, envelope box 9737 and deposit box 9739 comprise a means for lockably securing offering plate 100 thereto. The combination of envelope box and offering plate 100, and/or deposit box and offering plate 100 are optionally on an offering plate network.

FIG. 4 is a schematic block diagram of an offering plate of the present invention, a card reader 307 and related circuitry 303 addition, and a key board 107 and related circuitry 109 addition. In this embodiment, offering plate 100 acts as a stand alone unit for accepting card 145, 150, cash 143, and envelope 600 donations. For example, in Figure 3 communication link can be a wireless communication link. Further, in one embodiment, data storage 302 stores in the range of 10 to 1000+ donation transactions, including card information and associated donation information, the particular storage requirements being dictated by the number of attenders expected to use offering plate 100. Preferably, data storage can store approximately 200 transactions.

The present invention also contemplates that in other embodiments swiping a credit card 145 or debit card 150 might not be required. As used herein, the term "swiping" refers to any method for communicating information on a card to a card reader 307. Another embodiment of the invention has the features enumerated above in FIG. 1, with the addition of a receipt generator 820 at offering plate 100.

A member may wish to obtain receipt 830 directly after he has made a donation. After entering his donation, by way of example, a cash donation 143, display 840 displays a message asking the member is he wishes a receipt for his donation. The member presses a key representing yes on keypad 890. Receipt generator 820 prints receipt 830 for the member. The receipt contains the member's name, the amount of the donation, the date of the donation, and/or the collection for which the donation was given.

As viewed in FIG.S 8, 8a, and 8b, offering plate 100 is used to solicit a donation at religious place, or generally by a charitable organization at some other location. The donation is made by an information bearing card, e.g. 145, 150. A method comprises the steps of: prompting an attender to pass an information bearing card, e.g. through a card reader 307; prompting an attender to enter information representative of a donation amount; and, optionally prompting said attender to verify said information representative of a donation amount. Verification may include a prompt to press a key representative of a "YES," "NO," or "ENTER." Prompting is accomplished by displaying an alpha-numeric message on display 840. Optionally prompting may be accomplished by providing alpha-numeric text disposed on offering plate 100, offering station 7000, or combination thereof. Further optional prompts may include a prompt for the address of and attender, a prompt requesting a special intention, or combination thereof. Further an optional message prompt may include the following text portions: "SLIDE CARD THROUGH CARD READER 1400," "ENTER DONATION AMOUNT 1401," "PRESS YES 1402," "ENTER OFFERING AMOUNT," "ENTER CONTRIBUTION," a variation on the themes of the text, or combination thereof.

FIG. 5 is a perspective view of a portable offering plate 100, a docking station 1999 for portable offering plate 100, and a container 440 for gathering cash and envelope donations.

Docking station 1999 allows for an offering plate 100 to be docked. In one embodiment, offering plate 100 is communicatively attached to docking station 1999 to allow information from an information bearing card and/or donation amount information to be transmitted via docking station 1999 to, by way of example, terminal 120 (via communication link 140), to a card account processor 1031 directly via communication link 140 (FIG. 4), to another offering plate 100, or a combination thereof. In one embodiment, a plurality of docking stations 1999 are networked on an offering plate network.

Docking station 1999 can also be used to communicatively attach a card reader 307, related circuitry 303 (FIG.4), means for entering a donation amount, means for storing donation amount information, means for storing card information from an information bearing card, means for transmitting information from an offering plate, or combination thereof, to a container 440 (FIG. 5 and 8) for collecting cash donations, envelope donations, or combination thereof. Moreover, a offering plate 100 or docking station 1999 may also be located on the interior or exterior of a building and/or a permanently mounted to an envelope collection box (FIG. 8). In one embodiment, docking station 1999 provides a means for energizing offering plate 100. Optionally, docking station 1999 has a port 7778 for recharging a power supply on offering plate 100. Port 7778 is optionally used for communicatively attaching offering plate 100 to an offering plate network, where the offering plate network facilitates that transmittal of donation information and card information to a card account processor.

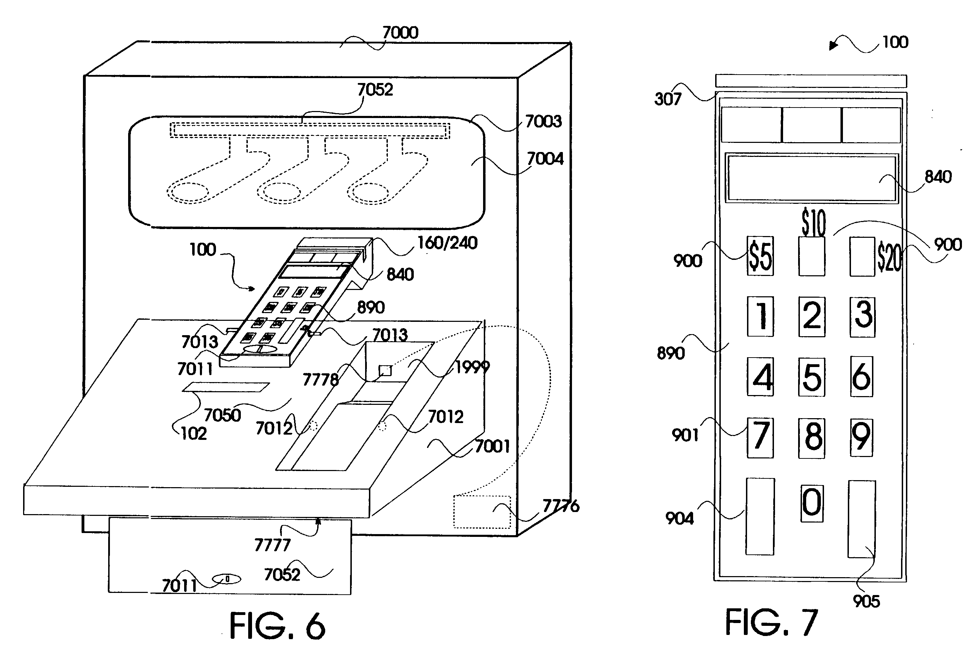

In another embodiment docking station 1999 includes a slide in mounting unit (not pictured) onto which offering plate 100 is connected to container 100 (FIG. 5) or offering station 7000 (FIG. 6). In an embodiment, offering plate 100 slides into docking station 1999 (FIG. 5 or 6), and plugs into the docking station 1999, e.g. into port 7778 (FIG. 6). In an alternate embodiment, docking station 1999, and/or offering plate 100 contain a base mount (not pictured). The base mount includes a plate on the bottom or side of offering plate 100. In one embodiment, the plate is offset from the bottom of offering plate 100. The plate allows offering plate 100 to slide into docking station 1999.

In an alternate embodiment, offering plate 100 is permanently mounted in docking station 1999. Optionally, docking station 1999 has a surface 7058 (FIG. 5) or surface 7050 (FIG. 6) on which a portable card processor 160/240 rests without an electrical connection. Offering plate is taken from the docking station 1999 surface 7050, 7058 after a donation session and linked to a card account processor database 1031 via communication link 140. In one embodiment, docking station 1999 can be integrally molded into the body of container 440. Optionally, docking station 1999 comprises an optional indentation of a size and shape to retain offering plate 100 on surface 7058, container 440, or combination thereof.

In yet another embodiment, offering plate 100, and docking station 1999 contain complementary electrical connectors (not pictured), the connection of which provides sufficient connection to provide a communication link to move data. Numerous communication links discussed above can also be used to provide connections to move data.

In various embodiments, docking station 1999, terminal 120, offering plate 100, card account processor 1031, or a combination thereof, are on the same network. Downloading information from the devices on the network is directed to a terminal 120 in one embodiment, to a modem in another embodiment, or to a card account processor database in yet another embodiment.

Docking station 1999 (FIG. 5 and 6) is constructed of plastic, metal, wood, or any other material appropriate to create a surface on which offering plate 100 can rest. Docking station 1999 is fastened to the side of container 440 via a fastening means (not pictured). By way of example, a fastening means includes adhesive, rivets, snaps, velcro, screws, or combination thereof. It will be appreciated that this embodiment of the invention allows container 440 to be retrofitted with offering plate 100 in order to allow card 145/150 donations to be obtained. In an alternate embodiment, container 440 includes a clip (not pictured) or other appendage (not pictured) allowing for the offering plate 100 to be fixed thereto or removable attached thereto.

Optional hook and loop fastener 7002 comes into contact with a sister hook and loop fastener (not pictured) disposed on the underside of offering plate 100 to releaseably connect offering plate 100 to docking station 1999 (FIG. 5 and 6), surface 7058 (FIG.5), or surface 7050 (FIG.6).

FIG. 6 is a perspective view of an offering station 7000 comprising offering plate 100, optional docking station 1999, optional container 7001 for collecting cash and envelope donations, and an optional means for lockably securing an offering plate 100 to docking station 1999, surface 7050, or combination thereof.

Offering station 7000 has a surface 7050. Offering station has optional aperture 7003 through which light source 7052 radiates light. Lens 7004 is interposed between aperture 7003 and source 7052. Lens 7004 has alpha-numeric text disposed thereon in one embodiment, e.g. the name of a religious organization. Offering plate 100 rests on surface 7050 removably attached with a hook and loop fastener as described in FIG. 5 or lockably disposed in docking station 1999 by way of a locking mechanism 7011. Pins 7013 retract or enter apertures 7012 in response to locking mechanism 7011 being locked or unlocked. A variety of locking mechanisms and assemblies for lockably securing offering plate 100 are known in the art. The present invention contemplates that offering plate 100 is optionally lockably disposed on surface 7050. These locking assemblies may be used when offering plate 100 is secured to container 440 (FIG.5), an envelope collection container (FIG.8) or combination thereof. Mechanical and electronic locking assemblies are used to lockably secure offering plate 100. By way of example, these may include lock and key combinations, padlocks, and the like. Port 7778 is used with a complimentary port on offering station 100, a communication link 140, or combination thereof, to energize offering plate 100 via optional power supply 7776.

FIG. 7 is a top plan view of a user interface of an offering plate 100. A card reader 307 for reading card information from an information bearing card, and display 840 are disposed on offering plate 100. A means for entering donation amount information comprises, a key representative of a fixed donation amount 900, e.g. a key representative of ten dollars, a key representative of a single digit integer 901, a confirmation key 904, a negation key 905, or combination thereof. Key 904 may represent a "yes" key. Key 905 may represent a "no" key. It will be appreciated that key 900 allows for an attender to make a donation rapidly. Key 900 has optional information representative of two or more currencies of different countries.

While only a few, preferred embodiments of the invention have been described hereinabove, those of ordinary skill in the art will recognize that the embodiment may be modified and altered without departing from the central spirit and scope of the invention. Thus, the preferred embodiment described hereinabove is to be considered in all respects as illustrative and not restrictive, the scope of the invention being indicated by the appended claims, rather than by the foregoing description, and all changes which come within the meaning and range of equivalency of the claims are intended to be embraced herein.

## Claims

1. A computer implemented method of interactive fund-raising across a data packet transferring computer network (140, 990, 1030), comprising communicating a request for a contribution data packet to a plurality of remote contribution accepting devices (100) communicatively linked to a contributions managing device (120) and remote from each other and geographically remote from said contributions management device, accepting said request for a contribution data packet as said remote contribution accepting devices by way of routine, said remote contributions accepting devices utilizing a routine for accepting at least one contribution, and said request being at least visually presented (840) on said contribution accepting device; inputting contributions at said remote contribution accepting devices in response to said request; receiving and recording at said contributions managing device from a plurality of said remote contribution accepting devices said contributions inputted on said plurality of said remote contribution accepting devices, and said contributions managing device having a routine (S1200) for receiving and recording contributions from at least one contribution accepting device.

2. The method in accordance with claim 1 in which said request for a request for a contribution data packet is a data packet request for a contribution made in memory of or in honor of an individual who is deceased, and further comprising processing said data packet request on said contributions accepting devices to achieve visual presentation (840, 860) of said request on said contributions accepting devices.

3. The method in accordance with claim 1 further comprising correlating respective contributions with recipient data, said recipient data being selected from the group consisting of an individual who is deceased, a single recipient of a collection and a recipient selected from a plurality of recipients, to obtain correlated recipient data; temporarily storing (302, 658, 1001) respective correlated recipient data at respective contribution accepting devices; transferring said correlated recipient data to said contributions management device; and processing said correlated recipient data.

4. The method in accordance with claim 1 further comprising requesting contributor information (S1502, S1539) at said remote contribution accepting devices free of information unrelated to said contributor, temporarily capturing respective contributor information (S1535) and a respective contribution designated by said contributor at said contribution accepting devices; and transmitting said contributor information to said contributions managing device.

5. The method in accordance with claim 1 further comprising presenting to prospective contributors a request for a contribution, said request for a contribution comprising data packets comprising multiple display screens (842, S1511) soliciting the entry of a contribution.

6. The method in accordance with claim 1 further comprising temporarily retaining information on said contributions on said remote contribution accepting devices prior to communication of said contributions to said contributions managing device.

7. The method in accordance with claim 1 further comprising communicating said contributions from said contributions managing device to a funds processing device (160, 240) for further processing thereof.

8. The method in accordance with claim 1 further comprising correlating a respective contribution to a cause to which said respective contribution was designated to obtain cause correlated contribution data, communicating said cause correlated contribution data to a record generator (820, 830) remotely located from a number of said contribution accepting devices, generating a record at said record generator having thereon at least a portion of said cause correlated contribution data, and forwarding said record to a recipient of said record.

9. The method in accordance with claim 1 further comprising communicating a message expressing gratitude to a respective contributor for a corresponding contribution from a device other than said respective remote contribution accepting device in response to a contribution entered at said respective remote contribution accepting device.

10. The method of claim 1 further comprising electronically inputting contributor signature indicia (860, 870, 877, 880, 920) correlated to a respective contribution to obtain correlated contribution and signature data, temporarily capturing said correlated contribution and signature indicia data on said remote contribution accepting devices, generating signature indicia data packets of said correlated contribution and signature indicia data, and communicating said signature indicia data packets to said contributions management device.

11. The method in accordance with claim 1 further comprising monitoring said contributions entered at said remote contribution accepting devices in real time, whereby the tracking of contributions made at a plurality of geographically remote distinct contribution sites is facilitated.

12. The method in accordance with claim 1 further comprising adding additional contributions to a running total of said contributions stored at an electronic device other than said remote contributions accepting device.

13. The method in accordance with claim 1 in which said request for a contribution is a multi-lingual request for a contribution data packet.

14. The method in accordance with claim 1 in which said request for a contribution is a multi-lingual request for contribution data packet and further comprising communicating said multi-lingual request for a contribution data packet from said contributions managing device to said respective remote contributions accepting devices.

15. The method in accordance with claim 1 further comprising correlating said contributions with respective account data.

16. The method in accordance with claim 1 further comprising correlating a respective contribution with a respective request for contribution data packet, said request for contribution data packet selected from the group consisting of prayer data packet, an entreaty data packet and petition data packet, to obtain a correlated request; and, processing said correlated request.

17. The method in accordance with claim 1 further comprising electronically determining whether or not a plurality of said contributions have reached a quota.

18. The method in accordance with claim 1 further comprising correlating a respective contribution with identity data of a respective contributor making a respective contribution.

19. The method in accordance with claim 1 further comprising automatically correlating a respective contribution with an account of a respective contributor making said contribution.

20. The method in accordance with claim 1 further comprising compiling statistical data indicators (S500, S520) from said contributions, said statistical data indicators selected from the group consisting of an effectiveness of a request soliciting the making of a contribution, contribution habits of contributors, a number of contributors making contributions over a period of time, and an amount of contributions raised over time.

21. The method in accordance with claim 1 in which said remote contribution accepting devices comprise input means, said input means selected from the group consisting of a keyboard (107) and touch sensitive screen (860), at least one microprocessor (530, 533, 536, 903), and a display (840, 842), and further comprising the step inputting contribution data on said remote contribution accepting device.

22. The method in accordance with claim 1 in which said remote contribution accepting devices comprise input means selected from the group consisting of a keyboard and touch sensitive screen, at least one microprocessor, and a display; and, said contributions managing device comprising a plurality of microprocessors and a display, and further comprising inputting contribution data on a remote contribution accepting device (100).

23. The method in accordance with claim 1 further comprising presenting on said remote contribution accepting devices symbols representing operators for inducing the making of monetary contributions, said symbols comprising said request for contribution data.

24. The method in accordance with claim 1 further comprising presenting symbols representing monetary values of an order inducing the making of contribution preferences of contributors, said values selected from the group consisting essentially of $1, $5, $10, $15, and $N+$5, in which N is an integer and 15≦N, said symbols being communicated to said contribution accepting devices in said request for contribution data packet.

25. The method in accordance with claim 1 further comprising assembling information on a series of contributions of a respective contributor until said contributions reach a selected value, and processing said contributions once said selected value has been reached.

26. The method in accordance with claim 1 in which said routine for accepting at least one contribution is a software routine for accepting successively made contributions one after another free of information unrelated to said contributions or said contributors, and in which said routine for receiving and recording contributions from at least one contribution accepting device is a software routine for accepting a multiplicity of said successively made contributions from said remote contributions accepting devices.

27. The method in accordance with claim 1 further comprising electronically analyzing statistical information related to said contributions.

28. The method in accordance with claim 1 in which said remote contribution accepting devices comprise a keyboard (107), a display, and means for capturing information (S1535) from record bearing credit cards (145) or debit cards (150), and further comprising the step inputting contribution data on a remote contribution accepting device.

29. The method in accordance with claim 1 further comprising accommodating the contribution preference of contributors by presenting on said contribution accepting devices an additional request selected from the group comprising a request for a contribution inducing the making of said contribution, and a request for the making of a contribution to a plurality of different causes.

30. The method in accordance with claim 1 in which said request comprises requests to enter a contribution to more than one collection for which said contributions are being solicited; designating a respective collection to obtain designated collection data; and, correlating said designated collection data with a respective contribution being designated to said collection to obtain correlated contribution and collection data; and in which said correlated contribution and collection data are received and recorded at said contributions managing device.

31. The method in accordance with claim 1 in which said request comprises a plurality of requests to make contributions to a plurality of collections for which said contributions are being solicited, and further comprising correlating respective contributions with the collections for which they are designated.

32. The method in accordance with claim 1 further comprising coding said contributions at said electronic contribution accepting devices to obtain coded contributions; and decoding said coded contributions at a device other than said electronic contribution accepting devices.

33. The method in accordance with claim 1 further comprising communicatively linking said contributions accepting devices in a local area network.

34. The method in accordance with claim 1 further comprising tallying (S480) said contributions, said contributions selected from the group of contributions entered by respective individual contributors and contributions made by different contributors.

35. The method in accordance with claim 1 further comprising compiling a statistical indicator from a plurality of said contributions entered on said contribution accepting devices; and, targeting a particular potential contributor with a subsequent request for a contribution as a function of said statistical indicator, said potential contributor selected from the group consisting of a particular contributor, sub-group of contributors, and group of contributors with a request for a contribution, whereby said entity is targeted in an effort to maximize overall contributions.

36. The method in accordance with claim 1 further comprising automatically quantifying data related to a plurality of said contributions entered on said contribution accepting devices to obtain a quantified judgment indicator; and, modifying a subsequent request for a contribution in response to said quantified judgment indicator.

37. The method in accordance with claim 1 in which said contributions are selected from the group consisting of free will offerings and tithes.

38. The method in accordance with claim 1 further comprising executing a contribution session in which said request for a contribution is displayed for a time out period (S1511).

39. The method in accordance with claim 1 further comprising executing a contribution session to obtain session information consisting essentially of contributions and contributor information; and, periodically clearing said session information from a device selected from the group consisting of said contributions managing device and said contributions accepting devices.

40. The method in accordance with claim 1 further comprising executing a contribution session to obtain session information, said session information consisting of contributor information and contribution information.

41. The method in accordance with claim 1 further comprising determining the genuiness of said contribution.

42. The method in accordance with claim 1 in which said contribution accepting device further comprises a donation associator (1340) and, further comprising correlating a particular contribution with a particular contributor utilizing said donation associator.

43. The method in accordance with claim 1 further comprising grouping a plurality of respective contribution managing devices with contribution accepting devices, each said contribution managing device communicating with at least one respective contribution accepting device, to obtain a plurality of grouped contribution collecting systems; communicatively linking said grouped collecting systems, and sharing contribution data between said grouped collecting systems.

44. The method in accordance with claim 1 in which there are multiple collections for which contributions are solicited during an electronic contribution session and further comprising designating the specific collection to which a respective contribution is designated during said contribution session.

45. The method in accordance with claim 1 further comprising correlating special prayer request data packet with a respective contribution related thereto.

46. The method in accordance with claim 1 further comprising communicating a multiplicity of said contributions from a plurality of contributions managing devices to a central database for further processing, said contributions managing devices being located at geographically remote fund-raising organizations or sites designated by said fund-raising organizations.

47. The method in accordance with claim 1 in which said contributions are free of information unrelated to said respective contributions.

48. A computer implemented system for interactive fund-raising across a data packet transferring computer network (140, 1030, 990), comprising in combination, a plurality of contribution accepting devices (100) remote one from another; a routine (S1200) comprising a request for a contribution presented on a plurality of said remote contribution accepting devices; a communication link (1030) linking respective remote contribution accepting devices to a respective contributions managing device; and a routine (S1200) for receiving at said contributions managing device from a plurality of said remote contribution accepting devices a plurality of contributions entered on said contribution accepting devices, and said contributions management device being optionally geographically remote from a plurality of said electronic contributions accepting devices.

49. The system in accordance with claim 48 in which respective contributions are free of information unrelated to said respective contributions.

50. The system in accordance with claim 48 in which said request for a contribution is a request for a contribution to a plurality of causes.

51. The system in accordance with claim 48 further comprising a routine that correlates a respective contribution to a cause to which said respective contribution was designated to obtain correlated contribution data, a record generator (820, 830) remotely located from a plurality of said contribution accepting devices, communication circuitry for communicating said correlated contribution data to said record generator, a routine for generating a record at said record generator, and having thereon at least a portion of said correlated contribution data; and means for forwarding said record to a recipient of said record.

52. The system in accordance with claim 48 in which said request for a contribution is a request for a contribution made in memory of or in honor of an individual who is deceased, and further comprising a routine for processing said request on said contributions accepting devices to achieve visual presentation of said request on said contributions accepting devices.

53. The system in accordance with claim 48 further comprising a routine correlating respective contributions with recipient data, said recipient data being selected from the group consisting of an individual who is deceased, a single recipient of a collection and a recipient selected from a plurality of recipients, to obtain correlated recipient data; a temporary storage device for temporarily storing respective correlated recipient data at respective contribution accepting devices; a transferring routine for transferring said correlated recipient data to said contributions management device; and a processing routine for processing said correlated recipient data.

54. The system in accordance with claim 48 further comprising a screen requesting contributor information presented on said remote contribution accepting devices, a temporary capture routine for temporarily capturing respective contributor information and a respective contribution designated by said contributor at said contribution accepting devices; and a transmitting routine for transmitting said contributor information to said contributions managing device.

55. The system in accordance with claim 48 further comprising multiple display screens soliciting the entry of a contribution presented on said contribution accepting devices.

56. The system in accordance with claim 48 further comprising a memory for temporarily retaining information on said contributions on said remote contribution accepting devices prior to communication of said contributions to said contributions managing device.

57. The system in accordance with claim 48 further comprising communication circuitry communicating said contributions from said contributions managing device to a funds processing device for further processing thereof.

58. The system in accordance with claim 48 further comprising a correlating routine for correlating a respective contribution to a cause to which said respective contribution was designated to obtain cause correlated contribution data, a communication routine communicating said cause correlated contribution data to a record generator remotely located from a number of said contribution accepting devices, said record generator generating a record at said record generator having thereon at least a portion of said cause correlated contribution data, and forwarding means for forwarding said record to a recipient of said record.

59. The system in accordance with claim 48 further comprising a message communicator for communicating a message expressing gratitude to a respective contributor for a corresponding contribution from a device other than said respective remote contribution accepting device in response to a contribution entered at said respective remote contribution accepting device.

60. The system of claim 48 further comprising a device for electronically inputting contributor signature indicia correlated to a respective contribution to obtain correlated contribution and signature data, a memory for temporarily capturing said correlated contribution and signature indicia data on said remote contribution accepting devices, a transmitter for generating transmission data from said correlated contribution and signature indicia data, and communication means for communicating said transmission data to said contributions management device.

61. The system in accordance with claim 48 further comprising a routine for monitoring said contributions entered at said remote contribution accepting devices in real time, whereby the tracking of contributions made at a plurality of geographically remote distinct contribution sites is facilitated.

62. The system in accordance with claim 48 further comprising a routine for adding additional contributions to a running total of said contributions stored at an electronic device other than said remote contributions accepting device.

63. The system in accordance with claim 48 in which said request for a contribution is a multi-lingual request for contribution data.

64. The system in accordance with claim 48 in which said request for a contribution is a multi-lingual request for contribution data and further comprising a routine for communicating said multi-lingual request for contribution data from said contributions managing device to said respective remote contributions accepting devices.

65. The system in accordance with claim 48 further comprising a routine for correlating said contributions with respective account data.

66. The system in accordance with claim 48 further comprising a routine correlating a respective contribution with a respective request for contribution data, said request for contribution data selected from the group consisting of prayer data, entreaty data, and petition data, to obtain a correlated request; and, a routine for processing said correlated request.

67. The system in accordance with claim 48 further comprising a routine for electronically determining whether or not a plurality of said contributions have reached a quota.

68. The system in accordance with claim 48 further comprising a routine for correlating a respective contribution with identity data of a respective contributor making a respective contribution.

69. The system in accordance with claim 48 further comprising a routine for automatically correlating a respective contribution with an account of a respective contributor making said contribution.

70. The system in accordance with claim 48 further comprising a routine for compiling statistical data indicators from said contributions, said statistical data indicators selected from the group consisting of an effectiveness of a request soliciting the making of a contribution, contribution habits of contributors, a number of contributors making contributions over a period of time, and an amount of contributions raised over time.

71. The system in accordance with claim 48 in which said remote contribution accepting devices comprise input means, said input means selected from the group consisting of a keyboard and touch sensitive screen, at least one microprocessor, and a display.

72. The system in accordance with claim 48 in which said remote contribution accepting devices comprise input means selected from the group consisting of a keyboard and touch sensitive screen, at least one microprocessor, and a display; and, said contributions managing device comprising a plurality of microprocessors and a display.

73. The system in accordance with claim 48 further comprising a routine presenting on said remote contribution accepting devices symbols representing operators for inducing the making of monetary contributions, said symbols being comprising said request for contribution.

74. The system in accordance with claim 48 further comprising a routine presenting symbols representing monetary values of an order inducing the making of contribution preferences of contributors, said values selected from the group consisting essentially of $1, $5, $10, $15, and $N+$5, in which N is an integer and 15≦N, said symbols being communicated to said contribution accepting devices in said request for contribution.

75. The system in accordance with claim 48 further comprising a routine for assembling information on a series of contributions of a respective contributor until said contributions reach a selected value, and a routine for processing said contributions once said selected value has been reached.

76. The system in accordance with claim 48 in which said routine for accepting at least one contribution is a software routine for accepting successively made contributions one after another free of information unrelated to said contributions or said contributors, and in which said routine for receiving and recording contributions from at least one contribution accepting device is a software routine for accepting a multiplicity of said successively made contributions from said remote contributions accepting devices.

77. The system in accordance with claim 48 further comprising a routine for electronically analyzing statistical information related to said contributions.

78. The system in accordance with claim 48 in which said remote contribution accepting devices comprise a keyboard, a display, and means for capturing information from record bearing credit cards or debit cards.

79. The system in accordance with claim 48 further comprising a routine for accommodating the contribution preference of contributors by presenting on said contribution accepting devices an additional request selected from the group comprising a request for a contribution inducing the making of said contribution, and a request for the making of a contribution to a plurality of different causes.

80. The system in accordance with claim 48 in which said request comprises requests to enter a contribution to more than one collection for which said contributions are being solicited; a routine for designating a respective collection to obtain designated collection data; and, a routine for correlating said designated collection data with a respective contribution being designated to said collection to obtain correlated contribution and collection data; and in which said correlated contribution and collection data are received and recorded at said contributions managing device.

81. The system in accordance with claim 48 in which said request comprises a plurality of requests to make contributions to a plurality of collections for which said contributions are being solicited, and further comprising a routine correlating respective contributions with the collections for which they are designated.

82. The system in accordance with claim 48 further comprising a routine for coding said contributions at said electronic contribution accepting devices to obtain coded contributions; and a routine for decoding said coded contributions at a device other than said electronic contribution accepting devices.

83. The system in accordance with claim 48 further comprising a routine for communicatively linking said contributions accepting devices in a local area network.

84. The system in accordance with claim 48 further comprising a routine for tallying said contributions, said contributions selected from the group of contributions entered by respective individual contributors and contributions made by different contributors.

85. The system in accordance with claim 48 further comprising a routine for compiling a statistical indicator from a plurality of said contributions entered on said contribution accepting devices; and, a routine for targeting a particular potential contributor with a subsequent request for a contribution as a function of said statistical indicator, said potential contributor selected from the group consisting of a particular contributor, sub-group of contributors, and group of contributors with a request for a contribution, whereby said entity is targeted in an effort to maximize overall contributions.

86. The system in accordance with claim 48 further comprising a routine for automatically quantifying data related to a plurality of said contributions entered on said contribution accepting devices to obtain a quantified judgment indicator; and, a routine for modifying a subsequent request for a contribution in response to said quantified judgment indicator.

87. The system in accordance with claim 48 in which said contributions are selected from the group consisting of free will offerings and tithes.

88. The system in accordance with claim 48 further comprising a routine for executing a contribution session in which said request for a contribution is displayed for a time out period.

89. The system in accordance with claim 48 further comprising a routine executing a contribution session to obtain session information consisting essentially of contributions and contributor information; and, a routine for periodically clearing said session information from a device selected from the group consisting of said contributions managing device and said contributions accepting devices.

90. The system in accordance with claim 48 further comprising a routine for executing a contribution session to obtain session information, said session information consisting of contributor information and contribution information.

91. The system in accordance with claim 48 further comprising a routine for determining the genuiness of said contribution.

92. The system in accordance with claim 48 in which said contribution accepting device further comprises a donation associator; and, further comprising a routine for correlating a particular contribution with a particular contributor utilizing said donation associator.

93. The system in accordance with claim 48 further comprising a routine for presenting multiple collections for which contributions are solicited during an electronic contribution session and further comprising a routine for designating the specific collection to which a respective contribution is designated during said contribution session.

94. The system in accordance with claim 48 further comprising a routine for correlating special prayer request data with a respective contribution related thereto.

95. The system in accordance with claim 48 further comprising a routine for communicating a multiplicity of said contributions from a plurality of contributions managing devices to a central database for further processing, said contributions managing devices being located at geographically remote fund-raising organizations or sites designated by said fund-raising organizations.

## Patentansprüche

1. Ein in ein Computer implementiertes Verfahren zur interaktiven Spendensammlung über ein Computernetzwerk (140,990,1030), das Datenpakete überträgt, umfassend Kommunikation einer Anfrage nach einem Spendendatenpaket ("contribution data packet") zu einer Vielzahl an entfernten Spendenannahmebauteilen (100), die kommunikativ mit einem Spendenverwaltungsbauteil (120) verbunden sind und sich entfernt voneinander befinden und sich geographisch entfernt von dem Spendenverwaltungsbauteil befinden, Annahme der Anfrage nach einem Spendendatenpaket bei den entfernten Spendenannahmebauteilen durch eine Routine, wobei die entfernten Spendenannahmebauteile eine Routine zur Annnahme mindestens einer Spende verwenden, und die Anfrage mindestens visuell (840) auf dem Spendenannahmebauteil präsentiert wird; Eingabe von Spenden bei den entfernten Spendenannahmebauteilen als Antwort auf die Anfrage; Erhalt und Erfassung bei dem Spendenverwaltungsbauteil von einer Vielzahl der entfernten Spendenannahmebauteilen der bei der Vielzahl an entfernten Spendenannahmebauteilen eingegebenen Spenden, und Aufweisen einer Routine (S1200) zum Erhalt und zur Erfassung von Spenden von mindestens einem Spendenannahmebauteil beim Spendenverwaltungsbauteil.

2. Das Verfahren gemäß Anspruch 1, wobei die Anfrage nach einer Anfrage nach einem Spendendatenpaket eine Datenpaketanfrage nach einer Spende, die zum Andenken an oder zu Ehren von einem verstorbenen Individuum geleistet wurde, darstellt, und des weiteren umfassend Prozessierung der Datenpaketanfrage in den Spendenannahmebauteilen, um visuelle Präsentation (840, 860) der Anfrage in den Spendenannahmebauteilen zu erzielen.

3. Das Verfahren gemäß Anspruch 1, des weiteren umfassend Korrelation entsprechender Spenden mit Empfängerdaten, wobei die Empfängerdaten aus der Gruppe, die aus einem verstorbenen Individuum, einem einzelnen Empfänger einer Sammlung und einem aus einer Vielzahl an Empfängern ausgewählten Empfänger besteht, ausgewählt werden, um korrelierte Empfängerdaten zu erhalten; zeitweise Speicherung (302, 658, 1001) entsprechender korrelierter Empfängerdaten bei entsprechenden Spendenannahmebauteilen; Übergabe der korrelierten Empfängerdaten an das Spendenverwaltungsbauteil; und Prozessierung der korrelierten Empfängerdaten.

4. Das Verfahren gemäß Anspruch 1, des weiteren umfassend Anfrage nach Information bezüglich Spendenzahlender (S1502, S1539) bei den Spendenannahmebauteilen frei von Information, die nicht mit dem Spendenzahlenden zusammenhängt, zeitweise Erfassung entsprechender Information bezüglich Spendenzahlender (S1535) und einer entsprechender Spende, die von dem Spendenzahlenden vorgesehen ist, durch die Spendenannahmebauteile; und Übergabe der Information bezüglich des Spendenzahlenden an das Spendenverwaltungsbauteil.

5. Das Verfahren gemäß Anspruch 1, des weiteren umfassend Präsentation einer Anfrage nach einer Spende für in Aussicht stehende Spendenzahlende, wobei die Anfrage nach einer Spende Datenpakete umfasst, die viele Anzeigen (842, S1511) mit der dringenden Bitte um den Eingang einer Spende umfassen.

6. Das Verfahren gemäß Anspruch 1, des weiteren umfassend zeitweises Zurückbehalten von Information bezüglich der Spenden auf den entfernten Spendenannahmebauteilen vor der Kommunikation der Spenden an das Spendenverwaltungsbauteil.

7. Das Verfahren gemäß Anspruch 1, des weiteren umfassend Kommunikation der Spenden von dem Spendenverwaltungsbauteil an ein Spendenprozessierungsbauteil (160, 240) für ihre weitere Prozessierung.

8. Das Verfahren gemäß Anspruch 1, des weiteren umfassend Korrelation einer entsprechenden Spende mit einem Anlass für den die entsprechende Spende vorgesehen war, um anlasskorrelierte Spendendaten zu erhalten, Kommunikation dieser anlasskorrelierten Spendendaten an einen Erfassungsgenerator (820, 830), der entfernt von einer Anzahl der Spendenannahmebauteilen angebracht ist, Generieren einer Erfassung in dem Erfassungsgenerator, der darauf mindestens einen Teil der anlasskorrelierten Spendendaten aufweist, und Weiterleiten der Erfassung an einen Empfänger der Erfassung.

9. Das Verfahren gemäß Anspruch 1, des weiteren umfassend Kommunikation einer Nachricht, die Dank an einen entsprechenden Spendenzahlenden für eine entsprechende Spende ausdrückt, von einem anderen Bauteil als das entsprechende entfernte Spendenannahmebauteil als Antwort auf eine Spende, der bei dem entsprechenden entfernten Spendenannahmebauteil eingegeben wurde.

10. Das Verfahren gemäß Anspruch 1, des weiteren umfassend elektronische Eingabe des Signaturfreimachungsvermerks ("signature indicia") (860, 870, 877, 880, 920) des Spendenzahlenden korreliert mit einer entsprechenden Spende, um entsprechende Spenden- und Signaturdaten zu erhalten, zeitweise Erfassung der Spenden- und Signaturfreimachungsvermerkdaten auf den entfernten Spendenannahmebauteilen, Generierung von Signaturfreimachungsvermerkdatenpaketen der korrelierten Spenden- und Signaturfreimachungsvermerkdaten, und Kommunikation der Signaturfreimachungsvermerkdatenpaketen an das Spendenverwaltungsbauteil.

11. Das Verfahren gemäß Anspruch 1, des weiteren umfassend Echtzeitüberwachung der Spenden, die bei den entfernten Spendenannahmebauteilen eingegeben wurden, wobei das Verfolgen von Spenden, die bei einer Vielzahl an geographisch deutlich entfernten Spendenorten geleistet wurden, unterstützt wird.

12. Das Verfahren gemäß Anspruch 1, des weiteren umfassend Hinzufügen weiterer Spenden zu einer sich verändernden Gesamtmenge an Spenden, die in einem elektronischen Bauteil gespeichert wird, das sich von dem entfernten Spendenannahmebauteil unterscheidet.

13. Das Verfahren gemäß Anspruch 1, wobei die Anfrage nach einer Spende eine multilinguale Anfrage nach einem Spendendatenpaket ist.

14. Das Verfahren gemäß Anspruch 1, wobei die Anfrage nach einer Spende eine multilinguale Anfrage nach einem Spendendatenpaket ist und des weiteren umfassend Kommunikation der eine multi-lingualen Anfrage nach einem Spendendatenpaket von dem Spendenverwaltungsbauteil an die entsprechenden entfernten Spendenannahmebauteile.

15. Das Verfahren gemäß Anspruch 1, des weiteren umfassend Korrelation der Spenden mit entsprechenden Kontodaten.

16. Das Verfahren gemäß Anspruch 1, des weiteren umfassend Korrelation einer entsprechenden Spende mit einer entsprechenden Anfrage nach einem Spendendatenpaket, wobei die Anfrage nach einem Spendendatenpaket aus der Gruppe, die aus Gebet-Datenpaket, einem Flehen-Datenpaket und Petition-Datenpaket besteht, ausgewählt wird, um eine korrelierte Anfrage zu erhalten; und Prozessierung der korrelierten Anfrage.

17. Das Verfahren gemäß Anspruch 1, des weiteren umfassend elektronische Bestimmung, ob oder ob nicht eine Vielzahl der Spenden eine Quote erreicht hat.

18. Das Verfahren gemäß Anspruch 1, des weiteren umfassend Korrelation einer entsprechenden Spende mit Identitätsdaten eines entsprechenden Spendenzahlenden, der eine entsprechende Spende leistet.

19. Das Verfahren gemäß Anspruch 1, des weiteren umfassend automatische Korrelation einer entsprechenden Spende mit einem Konto eines entsprechenden Spendenzahlenden, der die Spende leistet.

20. Das Verfahren gemäß Anspruch 1, des weiteren umfassend Zusammenstellung statistischer Datenindikatoren (S500, S520) von den Spenden, wobei die statistischen Datenindikatoren aus der Gruppe, die aus einer Effektivität einer Anfrage mit der dringenden Bitte um eine Spende, Spendengewohnheiten von Spendenzahlenden, einer Anzahl an Spendenzahlenden, die über eine Zeitperiode Spenden leisten, und einer Menge an über eine Zeit erhobener Spenden besteht, ausgewählt werden.

21. Das Verfahren gemäß Anspruch 1, wobei die entfernten Spendenannahmebauteile Eingabebauteile umfassen, wobei die Eingabebauteile aus der Gruppe, die aus einer Tastatur (107) und druckempfindlichen Bildschirm (860), mindestens einem Mikroprozessor (530, 533, 536, 903), und einem Bildschirm (840, 842) besteht, ausgewählt werden, und des weiteren umfassend den Schritt der Eingabe von Spendendaten in das entfernte Spendenannahmebauteil.

22. Das Verfahren gemäß Anspruch 1, wobei die entfernten Spendenannahmebauteile Eingabebauteile umfassen, die aus der Gruppe, die aus einer Tastatur und druckempfindlichen Bildschirm, mindestens einem Mikroprozessor, und einem Bildschirm besteht, ausgewählt werden; und das Spendenverwaltungsbauteil eine Vielzahl an Mikroprozessoren und einen Bildschirm umfasst, und des weiteren umfassend Eingabe von Spendendaten in ein entferntes Spendenannahmebauteil (100).

23. Das Verfahren gemäß Anspruch 1, des weiteren umfassend Präsentation von Symbolen, die Operatoren zur Veranlassung der Leistung von Buß-Spenden repräsentieren, auf den entfernten Spendenannahmebauteilen, wobei die Symbole die Anfrage nach Spendendaten umfassen.

24. Das Verfahren gemäß Anspruch 1, des weiteren umfassend Präsentation von Symbolen, die Buß-Werte einer Größe repräsentieren, die das Leisten von Spendenvorlieben von Spendenzahlenden induziert, wobei die Werte aus der Gruppe, die essentiell aus $1, $5, $10, $15, und $N+$5 besteht, wobei N eine ganze Zahl ist und 15<N, ausgewählt werden, wobei die Symbole an die Spendenannahmebauteile in der Anfrage nach einem Spendendatenpaket kommuniziert werden.

25. Das Verfahren gemäß Anspruch 1, des weiteren umfassend Zusammenfügen von Information bezüglich einer Serie von Spenden eines entsprechenden Spendenzahlenden bis die Spenden einen ausgewählten Wert erreichen, und Prozessierung der Spenden sobald der ausgewählte Wert erreicht ist.

26. Das Verfahren gemäß Anspruch 1, wobei die Routine zur Annahme mindestens einer Spende eine Software-Routine zur Annahme aufeinanderfolgend geleisteter Spenden, einer nach der anderen, frei von Information, die nicht mit den Spenden oder den Spendenzahlenden zusammenhängt, darstellt, und wobei die Routine zur Annahme und Erfassung von Spenden von mindestens einem Spendenannahmebauteil eines Software-Routine zur Annahme einer Vielzahl der aufeinanderfolgend geleisteter Spenden von den entfernten Spendenannahmebauteilen darstellt.

27. Das Verfahren gemäß Anspruch 1, des weiteren umfassend elektronische Analyse statistischer Information bezüglich der Spenden.

28. Das Verfahren gemäß Anspruch 1, wobei die entfernten Spendenannahmebauteile eine Tastatur (107), einen Bildschirm, und Bauteile zur Erfassung von Information (S1535) von Aufzeichnungen tragenden Kreditkarten (145) oder Debetkarten (150) umfassen, und des weiteren umfassend den Schritt der Eingabe von Spendendaten in ein entferntes Spendenannahmebauteil.

29. Das Verfahren gemäß Anspruch 1, des weiteren umfassend Entgegenkommen den Spendenvorlieben von Spendenzahlenden, indem auf den Spendenannahmebauteilen eine zusätzliche Anfrage präsentiert wird, die aus der Gruppe ausgewählt ist, die eine Anfrage nach einer Spende umfasst, wobei die Leistung der Spende induziert wird, und eine Anfrage nach der Leistung einer Spende für eine Vielzahl verschiedener Anlässe.

30. Das Verfahren gemäß Anspruch 1, wobei die Anfrage Anfragen zur Eingabe einer Spende für mehr als eine Sammlung, für die die Spenden erbeten werden, umfasst; Bestimmung einer entsprechenden Sammlung, um bestimmte Sammlungsdaten zu erhalten; und Korrelation der bestimmten Sammlungsdaten mit einer entsprechenden Spende, die der Sammlung zugehörig ist, um korrelierte Spenden- und Sammlungsdaten zu erhalten; und wobei die korrelierten Spenden- und Sammlungsdaten bei dem Spendenverwaltungbauteil erhalten und erfasst werden.

31. Das Verfahren gemäß Anspruch 1, wobei die Anfrage eine Vielzahl an Anfragen nach Spendenleistung für eine Vielzahl an Sammlungen, für die die Spenden erbeten werden, umfasst, und des weiteren umfassend Korrelation entsprechender Spenden mit den Sammlungen, für die sie bestimmt sind.

32. Das Verfahren gemäß Anspruch 1, des weiteren umfassend Kodierung der Spenden bei den elektronischen Spendenannahmebauteilen, um kodierte Spenden zu erhalten; und Dekodieren der kodierten Spenden bei einem anderen Bauteil als den elektronischen Spendenannahmebauteilen.

33. Das Verfahren gemäß Anspruch 1, des weiteren umfassend kommunikatives Verbinden der Spendenannahmebauteile innerhalb eines lokalen Netzwerks ("local area network").

34. Das Verfahren gemäß Anspruch 1, des weiteren umfassend Nachzählen (S480) der Spenden, wobei die Spenden aus der Gruppe an Spenden, die durch entsprechende individuelle Spendenzahlende eingegeben wurden, und an Spenden, die von verschiedenen Spendenzahlenden geleistet wurden, ausgewählt werden.

35. Das Verfahren gemäß Anspruch 1, des weiteren umfassend Zusammenstellen eines statistischen Indikators von einer Vielzahl aus den Spenden, die an den Spendenannahmebauteilen eingegeben wurden; und Zielen auf einen bestimmten potentiellen Spendenzahlenden mit einer folgenden Anfrage nach einer Spende als Funktion des statistischen Indikators, wobei der potentielle Spendenzahlende aus der Gruppe, die aus einem bestimmten Spendenzahlenden, aus einer Untergruppe von Spendenzahlenden, und aus einer Gruppe von Spendenzahlenden mit der Anfrage nach einer Spende besteht, ausgewählt wird, wobei auf diese Person gezielt wird, um die Gesamtspenden zu maximieren.

36. Das Verfahren gemäß Anspruch 1, des weiteren umfassend automatische Quantifizierung von Daten, die mit einer Vielzahl an Spenden, die an den Spendenannahmebauteilen eingegeben wurden, in Verbindung stehen, um einen quantifizierten Urteilsindikator zu erhalten; und Modifikation einer nachfolgenden Anfrage nach einer Spende als Antwort auf den quantifizierten Urteilsindikator.

37. Das Verfahren gemäß Anspruch 1, wobei die Spenden aus der Gruppe, die aus freiwilligen Angeboten und denen, die einen Zehnt bezahlen, bestehen.

38. Das Verfahren gemäß Anspruch 1, des weiteren umfassend Ausführung einer Spendensitzung, in der die Anfrage nach einer Spende während einer Unterbrechungszeit (S1511) erscheint.

39. Das Verfahren gemäß Anspruch 1, des weiteren umfassend Ausführung einer Spendensitzung, um Sitzungsinformation zu erhalten, die essentiell aus Spenden- und Spendenzahler-Information besteht; und periodisches Löschen der Sitzungsinformation von einem Bauteil, das aus der Gruppe, die aus dem Spendenverwaltungsbauteil und den Spendenannahmebauteilen besteht, ausgewählt wird.

40. Das Verfahren gemäß Anspruch 1, des weiteren umfassend Ausführung einer Spendensitzung, um Sitzungsinformation zu erhalten, wobei die Sitzungsinformation aus Information über Spendenzahlende und Spendeninformation besteht.

41. Das Verfahren gemäß Anspruch 1, des weiteren umfassend Feststellung der Echtheit der Spende.

42. Das Verfahren gemäß Anspruch 1, wobei das Spendenannahmebauteil des weiteren einen Spendenverknüpfer (1340) ("donation associator") umfasst, und des weiteren umfassend Korrelation einer bestimmten Spende mit einem bestimmten Spendenzahlenden unter Verwendung des Spendenverknüpfers.

43. Das Verfahren gemäß Anspruch 1, des weiteren umfassend Gruppieren einer Vielzahl an entsprechenden Spendenverwaltungsbauteilen mit Spendenannahmebauteilen, wobei jedes Spendenverwaltungsbauteil mit mindestens einem entsprechenden Spendenannahmebauteil kommuniziert, um eine Vielzahl an gruppierten Spendensammlungssystemen zu erhalten; kommunikatives Verbinden der gruppierten Sammlungssysteme, und gemeinsames Teilen der Spendendaten zwischen den gruppierten Sammlungssystemen.

44. Das Verfahren gemäß Anspruch 1, wobei es eine Vielzahl an Sammlungen gibt, für die während einer elektronischen Spendensitzung dringend um Spenden gebeten wird, und des weiteren umfassend Bestimmung der spezifischen Sammlung, für die eine bestimmte Spende bestimmt ist, während der Spendensitzung.

45. Das Verfahren gemäß Anspruch 1, des weiteren umfassend Korrelation eines speziellen Gebetsanfragedatenpakete mit einer entsprechenden damit zusammenhängenden Spende.

46. Das Verfahren gemäß Anspruch 1, des weiteren umfassend Kommunikation einer Vielzahl der Spenden von einer Vielzahl an Spendenverwaltungsbauteilen an eine zentrale Datenbasis zur weiteren Prozessierung, wobei sich die Spendenverwaltungsbauteile an geographisch entfernten Spendensammlungs-Organisationen oder -Plätzen befinden, die von den Spendensammlungsorganisationen bestimmt werden.

47. Das Verfahren gemäß Anspruch 1, wobei die Spenden keine Information, die nicht mit den entsprechenden Spenden zusammenhängt, enthalten.

48. Ein in einen Computer implementiertes System zur interaktiven Spendensammlung über ein Datenpaket transferierendes Computernetzwerk (140, 1030, 990), umfassend eine Kombination von einer Vielzahl an Spendenannahmebauteilen (100), die sich entfernt voneinander befinden; eine Routine (S1200), die eine Anfrage nach einer Spende umfasst, die auf einer Vielzahl der sich entfernt voneinander befindenden Spendenannahmebauteilen präsentiert wird; eine Kommunikationsverbindung (1030), die die entsprechenden Spendenannahmebauteile mit einem entsprechenden Spendenverwaltungsbauteil verbindet; und eine Routine (S1200) zum Erhalt einer Vielzahl an Spenden, die in die Spendenannahmebauteile eingegeben wurden, am Spendenverwaltungsbauteil von einer Vielzahl an den sich entfernt voneinander befindenden Spendenannahmebauteilen, und wobei sich das Spendenverwaltungsbauteil optional geographisch entfernt von einer Vielzahl der elektronischen Spendenannahmebauteilen befindet.

49. Das System gemäß Anspruch 48, wobei entsprechende Spenden keine Information, die nicht mit den entsprechenden Spenden zusammenhängt, enthalten.

50. Das System gemäß Anspruch 48, wobei die Anfrage nach einer Spende eine Anfrage nach der Leistung einer Spende für eine Vielzahl von Anlässen.

51. Das System gemäß Anspruch 48, des weiteren umfassend eine Routine, die eine entsprechende Spende mit einem Anlass, für den die entsprechende Spende bestimmt war, korreliert, um korrelierte Spendendaten zu erhalten, einen Erfassungsgenerator (820, 830) entfernt von einer Vielzahl der Spendenannahmebauteilen angebracht, Kommunikationsschaltung zur Kommunikation der korrelierten Spendendaten an den Erfassungsgenerator, eine Routine zur Generierung einer Erfassung in dem Erfassungsgenerator, und wobei sich darauf mindestens eine Teil der korrelierten Spendendaten befindet; und Bauteile zur Weiterleitung der Erfassung an einen Empfänger der Erfassung.

52. Das System gemäß Anspruch 48, wobei die Anfrage nach einer Spende eine Anfrage nach einer Spende, die zum Andenken an oder zu Ehren von einem verstorbenen Individuum geleistet wurde, darstellt, und des weiteren umfassend eine Routine zur Prozessierung der Anfrage in den Spendenannahmebauteilen, um visuelle Präsentation der Anfrage in den Spendenannahmebauteilen zu erzielen.

53. Das System gemäß Anspruch 48, des weiteren umfassend eine Routine zur Korrelation entsprechender Spenden mit Empfängerdaten, wobei die Empfängerdaten aus der Gruppe, die aus einem verstorbenen Individuum, einem einzelnen Empfänger einer Sammlung und einem Empfänger, der aus einer Vielzahl an Empfängern ausgewählt wird, ausgewählt werden, um korrelierte Empfängerdaten zu erhalten; ein zeitweises Speicherbauteil zur zeitweisen Speicherung entsprechender korrelierter Empfängerdaten in entsprechenden Spendenannahmebauteilen; eine Übertragungsroutine zur Übertragung der korrelierten Empfängerdaten mit dem Spendenverwaltungsbauteil; und eine Prozessierungsroutine zur Prozessierung der korrelierten Empfängerdaten.

54. Das System gemäß Anspruch 48, des weiteren umfassend einen Bildschirm, der nach Information bezüglich Spendenzahlender fragt, präsentiert auf den entfernten Spendenannahmebauteilen, eine zeitweise Erfassungsroutine zur zeitweisen Erfassung entsprechender Information bezüglich Spendenzahlender und einer entsprechenden Spende, die vom Spendenzahlenden bestimmt wird, auf den Spendenannahmebauteilen; und eine Übertragungsroutine zur Übertragung der Information bezüglich des Spendenzahlenden an das Spendenverwaltungsbauteil.

55. Das System gemäß Anspruch 48, des weiteren umfassend eine Vielzahl an Bildschirmbildern ("display screens"), die um den Eingang einer Spende bitten, präsentiert auf den Spendenannahmebauteilen.

56. Das System gemäß Anspruch 48, des weiteren umfassend einen Speicher zur zeitweisen Speicherung von Information bezüglich der Spenden bei den entfernten Spendenannahmebauteilen vor Kommunikation der Spenden an das Spendenverwaltungsbauteil.

57. Das System gemäß Anspruch 48, des weiteren umfassend eine Kommunikationsschaltung, die die Spenden vom Spendenverwaltungsbauteil an ein Spendenprozessierungsbauteil zu ihrer weitem Prozessierung übermittelt.

58. Das System gemäß Anspruch 48, des weiteren umfassend eine Korrelationsroutine zur Korrelation einer entsprechenden Spende mit einem Anlass, für den die entsprechende Spende bestimmt wurde, um anlasskorrelierte Spendendaten zu erhalten, eine Kommunikationsroutine, die die anlasskorrelierten Spendendaten an einen Erfassungsgenerator kommuniziert, der sich entfernt von einer Anzahl der Spendenannahmebauteilen befindet, wobei der Erfassungsgenerator eine Erfassung auf dem Erfassungsgenerator generiert, wobei er darauf mindestens einen Teil der anlasskorrelierten Spendendaten aufweist, und Weiterleitungsbauteile zur Weiterleitung der Erfassung an einen Empfänger der Erfassung.

59. Das System gemäß Anspruch 48, des weiteren umfassend einen Nachrichtenkommunikator zur Kommunikation einer Nachricht, die Dankbarkeit gegenüber einem entsprechenden Spendenzahlenden für eine entsprechende Spende ausdrückt, von einem anderen Bauteil als das entsprechende entfernte Spendanannahmebauteil als Antwort auf eine bei dem entsprechenden entfernten Spendenannahmebauteil eingegebene Spende.

60. Das System gemäß Anspruch 48, des weiteren umfassend ein Bauteil zur elektronische Eingabe des Signaturfreimachungsvermerks des Spendenzahlenden korreliert mit einer entsprechenden Spende, um entsprechende Spenden- und Signaturdaten zu erhalten, einen Speicher zur zeitweisen Erfassung der Spenden- und Signaturfreimachungsvermerkdaten auf den entfernten Spendenannahmebauteilen, einen Transmitter zur Generierung von Übertragungsdaten der korrelierten Spenden- und Signaturfreimachungsvermerkdaten, und Kommunikationsbauteile zur Kommunikation der Übertragungsdaten an das Spendenverwaltungsbauteil.

61. Das System gemäß Anspruch 48, des weiteren umfassend eine Routine zur Echtzeitüberwachung der Spenden, die bei den entfernten Spendenannahmebauteilen eingegeben wurden, wobei das Verfolgen von Spenden, die bei einer Vielzahl an geographisch deutlich entfernten Spendenorten geleistet wurden, unterstützt wird.

62. Das Verfahren gemäß Anspruch 48, des weiteren umfassend eine Routine zum Hinzufügen weiterer Spenden zu einer sich verändernden Gesamtmenge an Spenden, die in einem elektronischen Bauteil gespeichert wird, das sich von dem entfernten Spendenannahmebauteil unterscheidet.

63. Das Verfahren gemäß Anspruch 48, wobei die Anfrage nach einer Spende eine multilinguale Anfrage nach Spendendaten ist.

64. Das Verfahren gemäß Anspruch 48, wobei die Anfrage nach einer Spende eine multilinguale Anfrage nach Spendendaten ist und des weiteren umfassend eine Routine zur Kommunikation der eine multi-lingualen Anfrage nach Spendendaten von dem Spendenverwaltungsbauteil an die entsprechenden entfernten Spendenannahmebauteile.

65. Das Verfahren gemäß Anspruch 48, des weiteren umfassend eine Routine zur Korrelation der Spenden mit entsprechenden Kontodaten.

66. Das Verfahren gemäß Anspruch 48, des weiteren umfassend eine Routine zur Korrelation einer entsprechenden Spende mit einer entsprechenden Anfrage nach Spendendaten, wobei die Anfrage nach Spendendaten aus der Gruppe, die aus Gebet-Daten, Flehen-Daten und Petition-Daten besteht, ausgewählt wird, um eine korrelierte Anfrage zu erhalten; und umfassend eine Routine zur Prozessierung der korrelierten Anfrage.

67. Das Verfahren gemäß Anspruch 48, des weiteren umfassend eine Routine zur elektronische Bestimmung, ob oder ob nicht eine Vielzahl der Spenden eine Quote erreicht hat.

68. Das Verfahren gemäß Anspruch 48, des weiteren umfassend eine Routine zur Korrelation einer entsprechenden Spende mit Identitätsdaten eines entsprechenden Spendenzahlenden, der eine entsprechende Spende leistet.

69. Das Verfahren gemäß Anspruch 48, des weiteren umfassend automatische Korrelation einer entsprechenden Spende mit einem Konto eines entsprechenden Spendenzahlenden, der die Spende leistet.

70. Das Verfahren gemäß Anspruch 48, des weiteren umfassend eine Routine zur Zusammenstellung statistischer Datenindikatoren von den Spenden, wobei die statistischen Datenindikatoren aus der Gruppe, die aus einer Effektivität einer Anfrage mit der dringenden Bitte um eine Spende, Spendengewohnheiten von Spendenzahlenden, einer Anzahl an Spendenzahlenden, die über eine Zeitperiode Spenden leisten, und einer Menge an über eine Zeit erhobener Spenden besteht, ausgewählt werden.

71. Das Verfahren gemäß Anspruch 48, wobei die entfernten Spendenannahmebauteile Eingabebauteile umfassen, wobei die Eingabebauteile aus der Gruppe, die aus einer Tastatur und druckempfindlichen Bildschirm, mindestens einem Mikroprozessor, und einem Bildschirm besteht, ausgewählt werden.

72. Das Verfahren gemäß Anspruch 48, wobei die entfernten Spendenannahmebauteile Eingabebauteile umfassen, die aus der Gruppe, die aus einer Tastatur und druckempfindlichen Bildschirm, mindestens einem Mikroprozessor, und einem Bildschirm besteht, ausgewählt werden; und das Spendenverwaltungsbauteil eine Vielzahl an Mikroprozessoren und einen Bildschirm umfasst.

73. Das Verfahren gemäß Anspruch 48, des weiteren umfassend eine Routine zur Präsentation von Symbolen, die Operatoren zur Veranlassung der Leistung von Buß-Spenden repräsentieren, auf den entfernten Spendenannahmebauteilen, wobei die Symbole die Anfrage nach einer Spende umfassen.

74. Das Verfahren gemäß Anspruch 48, des weiteren umfassend eine Routine zur Präsentation von Symbolen, die Buß-Werte einer Größe repräsentieren, die das Leisten von Spendenvorlieben von Spendenzahlenden induziert, wobei die Werte aus der Gruppe, die essentiell aus $1, $5, $10, $15, und $N+$5 besteht, wobei N eine ganze Zahl ist und 15<N, ausgewählt werden, wobei die Symbole an die Spendenannahmebauteile in der Anfrage nach einer Spende kommuniziert werden.

75. Das Verfahren gemäß Anspruch 48, des weiteren umfassend eine Routine zum Zusammenfügen von Information bezüglich einer Serie von Spenden eines entsprechenden Spendenzahlenden bis die Spenden einen ausgewählten Wert erreichen, und Prozessierung der Spenden sobald der ausgewählte Wert erreicht ist.

76. Das Verfahren gemäß Anspruch 48, wobei die Routine zur Annahme mindestens einer Spende eine Software-Routine zur Annahme aufeinanderfolgend geleisteter Spenden, einer nach der anderen, frei von Information, die nicht mit den Spenden oder den Spendenzahlenden zusammenhängt, darstellt, und wobei die Routine zur Annahme und Erfassung von Spenden von mindestens einem Spendenannahmebauteil eines Software-Routine zur Annahme einer Vielzahl der aufeinanderfolgend geleisteter Spenden von den entfernten Spendenannahmebauteilen darstellt.

77. Das Verfahren gemäß Anspruch 48, des weiteren umfassend eine Routine zur elektronischen Analyse statistischer Information bezüglich der Spenden.

78. Das Verfahren gemäß Anspruch 48, wobei die entfernten Spendenannahmebauteile eine Tastatur, einen Bildschirm, und Bauteile zur Erfassung von Information von Aufzeichnungen tragenden Kreditkarten oder Debetkarten umfassen

79. Das Verfahren gemäß Anspruch 48, des weiteren umfassend eine Routine zum Entgegenkommen den Spendenvorlieben von Spendenzahlenden, indem auf den Spendenannahmebauteilen eine zusätzliche Anfrage präsentiert wird, die aus der Gruppe ausgewählt ist, die eine Anfrage nach einer Spende umfasst, wobei die Leistung der Spende induziert wird, und eine Anfrage nach der Leistung einer Spende für eine Vielzahl verschiedener Anlässe.

80. Das Verfahren gemäß Anspruch 48, wobei die Anfrage Anfragen zur Eingabe einer Spende für mehr als eine Sammlung, für die die Spenden erbeten werden, umfasst; eine Routine zur Bestimmung einer entsprechenden Sammlung, um bestimmte Sammlungsdaten zu erhalten; und eine Routine zur Korrelation der bestimmten Sammlungsdaten mit einer entsprechenden Spende, die der Sammlung zugehörig ist, um korrelierte Spenden- und Sammlungsdaten zu erhalten; und wobei die korrelierten Spenden- und Sammlungsdaten bei dem Spendenverwaltungbauteil erhalten und erfasst werden.

81. Das Verfahren gemäß Anspruch 48, wobei die Anfrage eine Vielzahl an Anfragen nach Spendenleistung für eine Vielzahl an Sammlungen, für die die Spenden erbeten werden, umfasst, und des weiteren umfassend Korrelation entsprechender Spenden mit den Sammlungen, für die sie bestimmt sind.

82. Das Verfahren gemäß Anspruch 48, des weiteren umfassend eine Routine zur Kodierung der Spenden bei den elektronischen Spendenannahmebauteilen, um kodierte Spenden zu erhalten; und eine Routine zum Dekodieren der kodierten Spenden bei einem anderen Bauteil als den elektronischen Spendenannahmebauteilen.

83. Das Verfahren gemäß Anspruch 48, des weiteren umfassend eine Routine zum kommunikativen Verbinden der Spendenannahmebauteile innerhalb eines lokalen Netzwerks.

84. Das Verfahren gemäß Anspruch 48, des weiteren umfassend eine Routine zum Nachzählen der Spenden, wobei die Spenden aus der Gruppe an Spenden, die durch entsprechende individuelle Spendenzahlende eingegeben wurden, und an Spenden, die von verschiedenen Spendenzahlenden geleistet wurden, ausgewählt werden.

85. Das Verfahren gemäß Anspruch 48, des weiteren umfassend eine Routine zum Zusammenstellen eines statistischen Indikators von einer Vielzahl aus den Spenden, die an den Spendenannahmebauteilen eingegeben wurden; und eine Routine zum Zielen auf einen bestimmten potentiellen Spendenzahlenden mit einer folgenden Anfrage nach einer Spende als Funktion des statistischen Indikators, wobei der potentielle Spendenzahlende aus der Gruppe, die aus einem bestimmten Spendenzahlenden, aus einer Untergruppe von Spendenzahlenden, und aus einer Gruppe von Spendenzahlenden mit der Anfrage nach einer Spende besteht, ausgewählt wird, wobei auf diese Person gezielt wird, um die Gesamtspenden zu maximieren.

86. Das Verfahren gemäß Anspruch 48, des weiteren umfassend eine Routine zur automatischen Quantifizierung von Daten, die mit einer Vielzahl an Spenden, die an den Spendenannahmebauteilen eingegeben wurden, in Verbindung stehen, um einen quantifizierten Urteilsindikator zu erhalten; und eine Routine zur Modifikation einer nachfolgenden Anfrage nach einer Spende als Antwort auf den quantifizierten Urteilsindikator.

87. Das Verfahren gemäß Anspruch 48, wobei die Spenden aus der Gruppe, die aus freiwilligen Angeboten und denen, die einen Zehnt bezahlen, bestehen.

88. Das Verfahren gemäß Anspruch 48, des weiteren umfassend eine Routine zur Ausführung einer Spendensitzung, in der die Anfrage nach einer Spende während einer Unterbrechungszeit erscheint.

89. Das Verfahren gemäß Anspruch 48, des weiteren umfassend eine Routine zur Ausführung einer Spendensitzung, um Sitzungsinformation zu erhalten, die essentiell aus Spenden- und Spendenzahler-Information besteht; und eine Routine zum periodischen Löschen der Sitzungsinformation von einem Bauteil, das aus der Gruppe, die aus dem Spendenverwaltungsbauteil und den Spendenannahmebauteilen besteht, ausgewählt wird.

90. Das Verfahren gemäß Anspruch 48, des weiteren umfassend eine Routine zur Ausführung einer Spendensitzung, um Sitzungsinformation zu erhalten, wobei die Sitzungsinformation aus Information über Spendenzahlende und Spendeninformation besteht.

91. Das Verfahren gemäß Anspruch 48, des weiteren umfassend eine Routine zur Feststellung der Echtheit der Spende.

92. Das Verfahren gemäß Anspruch 48, wobei das Spendenannahmebauteil des weiteren einen Spendenverknüpfer umfasst, und des weiteren umfassend eine Routine zur Korrelation einer bestimmten Spende mit einem bestimmten Spendenzahlenden unter Verwendung des Spendenverknüpfers.

93. Das Verfahren gemäß Anspruch 48, des weiteren umfassend eine Routine zur Präsentation einer Vielzahl an Sammlungen gibt, für die während einer elektronischen Spendensitzung dringend um Spenden gebeten wird, und des weiteren umfassend einer Routine zur Bestimmung der spezifischen Sammlung, für die eine bestimmte Spende bestimmt ist, während der Spendensitzung.

94. Das Verfahren gemäß Anspruch 48, des weiteren umfassend eine Routine zur Korrelation spezieller Gebetsanfragedaten mit einer entsprechenden damit zusammenhängenden Spende.

95. Das Verfahren gemäß Anspruch 48, des weiteren umfassend eine Routine zur Kommunikation einer Vielzahl der Spenden von einer Vielzahl an Spendenverwaltungsbauteilen an eine zentrale Datenbasis zur weiteren Prozessierung, wobei sich die Spendenverwaltungsbauteile an geographisch entfernten Spendensammlungs-Organisationen oder -Plätzen befinden, die von den Spendensammlungsorganisationen bestimmt werden.

## Revendications

1. Procédé informatisé de collecte de fonds à travers un réseau d'ordinateurs transférant des paquets de données (140, 990, 1030), comprenant le fait de communiquer une demande concernant un paquet de données de contributions à plusieurs dispositifs éloignés d'acceptation de contributions (100) reliés en communication à un dispositif de gestion de contribution (120) séparés les uns des autres et éloignés du point de vue géographique dudit dispositif de gestion de contribution ; accepter ladite demande concernant un paquet de données de contribution auxdits dispositifs éloignés d'acceptation de contributions à l'aide d'une routine, lesdits dispositifs éloignés d'acceptation de contributions utilisant une routine pour accepter au moins une contribution et ladite demande étant au moins présentée de manière visuelle (840) sur ledit dispositif d'acceptation de contributions ; entrer des contributions auxdits dispositifs éloignés d'acceptation de contributions en réponse à ladite demande ; recevoir et enregistrer, audit dispositif de gestion de contributions, à partir de plusieurs desdits dispositifs éloignés d'acceptation de contributions, lesdites contributions entrées dans lesdits plusieurs dispositifs éloignés d'acceptation de contributions, ledit dispositif de gestion de contributions possédant une routine (S1200) pour recevoir et enregistrer des contributions à partir d'au moins un dispositif d'acceptation de contributions.

2. Procédé selon la revendication 1, dans lequel ladite demande concernant un paquet de données de contributions représente une demande de paquet de données concernant une contribution apportée en mémoire ou en l'honneur d'un individu qui est décédé, et comprenant en outre le fait de traiter ladite demande de paquet de données auxdits dispositifs d'acceptation de contributions pour mettre en oeuvre une présentation visuelle (840, 860) de ladite demande sur lesdits dispositifs d'acceptation de contributions.

3. Procédé selon la revendication 1, comprenant en outre le fait de corréler des contributions respectives avec des données de bénéficiaires, lesdites données de bénéficiaires étant choisies parmi le groupe constitué par un individu qui est décédé, un bénéficiaire unique d'une collecte et un bénéficiaire choisi parmi plusieurs bénéficiaires, afin d'obtenir des données de bénéficiaires corrélées ; stocker de manière temporaire (302, 658, 1001) des données de bénéficiaires corrélées respectives à des dispositifs d'acceptation de contributions respectifs ; transférer lesdites données de bénéficiaires corrélées audit dispositif de gestion de contributions ; et traiter lesdites données de bénéficiaires corrélées.

4. Procédé selon la revendication 1, comprenant en outre le fait de demander des informations concernant des donateurs (S1502, S1539) auxdits dispositifs éloignés d'acceptation de contributions exemptes d'informations ne concernant pas ledit donateur ; saisir de manière temporaire des informations respectives concernant des donateurs (S1535) et une contribution respective désignée par ledit donateur auxdits dispositifs d'acceptation de contributions ; et transmettre lesdites informations concernant les donateurs audit dispositif de gestion de contributions.

5. Procédé selon la revendication 1, comprenant en outre le fait de présenter à des donateurs éventuels une demande concernant une contribution, ladite demande concernant une contribution comprenant des paquets de données comprenant de multiples écrans de visualisation (842, S1511) sollicitant l'entrée d'une contribution.

6. Procédé selon la revendication 1, comprenant en outre le fait de conserver de manière temporaire des informations concernant lesdites contributions auxdits dispositifs éloignés d'acceptation de contributions avant de communiquer lesdites contributions audit dispositif de gestion de contributions.

7. Procédé selon la revendication 1, comprenant en outre le fait de communiquer lesdites contributions provenant dudit dispositif de gestion de contributions à un dispositif de traitement de fonds (160, 240) à des fins de traitement ultérieur de ces derniers.

8. Procédé selon la revendication 1, comprenant en outre le fait de corréler une contribution respective à une cause désignée par ladite contribution respective afin d'obtenir des données de contributions corrélées à une cause ; communiquer lesdites données de contributions corrélées à une cause à un générateur de fichiers (820, 830) situé à distance d'un certain nombre desdits dispositifs d'acceptation de contributions ; générer un fichier audit générateur de fichiers qui reprend au moins une partie desdites données de contributions corrélées à une cause ; et transmettre ledit fichier à un destinataire dudit fichier.

9. Procédé selon la revendication 1, comprenant en outre le fait de communiquer un message exprimant de la gratitude à un donateur respectif pour une contribution correspondante à partir d'un dispositif différent dudit dispositif éloigné respectif d'acceptation de contributions en réponse à une contribution entrée audit dispositif éloigné respectif d'acceptation de contributions.

10. Procédé selon la revendication 1, comprenant en outre le fait d'entrer par voie électronique des indications de signature de donateurs (860, 870, 877, 880, 920) corrélées à une contribution respective afin d'obtenir des données corrélées de contribution et de signature ; saisir de manière temporaire lesdites données corrélées d'indications de signature et de contribution auxdits dispositifs éloignés d'acceptation de contributions ; générer des paquets desdites données corrélées d'indications de signature et de contribution ; et communiquer lesdits paquets de données d'indications de signature audit dispositif de gestion de contributions.

11. Procédé selon la revendication 1, comprenant en outre le fait de surveiller lesdites contributions entrées auxdits dispositifs éloignés d'acceptation de contributions en temps réel, par lequel on facilite le traçage des contributions réalisées à plusieurs sites de contributions distincts éloignés du point de vue géographique.

12. Procédé selon la revendication 1, comprenant en outre le fait d'ajouter des contributions supplémentaires à un total cumulé desdites contributions stockées à un dispositif électronique autre que ledit dispositif éloigné d'acceptation de contributions.

13. Procédé selon la revendication 1, dans lequel ladite demande concernant une contribution est une demande rédigée en plusieurs langues pour un paquet de données de contributions.

14. Procédé selon la revendication 1, dans lequel ladite demande concernant une contribution est une demande rédigée en plusieurs langues pour un paquet de données de contributions et comprenant en outre le fait de communiquer ladite demande rédigée en plusieurs langues concernant un paquet de données de contributions, à partir dudit dispositif de gestion de contributions, auxdits dispositifs éloignés respectifs d'acceptation de contributions.

15. Procédé selon la revendication 1, comprenant en outre le fait de corréler lesdites contributions avec des données de comptes respectives.

16. Procédé selon la revendication 1, comprenant en outre le fait de corréler une contribution respective avec une demande respective concernant un paquet de données de contributions, ladite demande concernant un paquet de données de contributions étant choisie parmi le groupe constitué par un paquet de données de prières, un paquet de données de supplications et un paquet de données de pétitions, afin d'obtenir une demande corrélée ; et traiter ladite demande corrélée.

17. Procédé selon la revendication 1, comprenant en outre le fait de déterminer par voie électronique le fait de savoir si plusieurs desdites contributions ont atteint un quota.

18. Procédé selon la revendication 1, comprenant en outre le fait de corréler une contribution respective avec des données d'identité d'un donateur respectif apportant une contribution respective.

19. Procédé selon la revendication 1, comprenant en outre le fait de corréler de manière automatique une contribution respective avec un compte d'un donateur respectif apportant une contribution respective.

20. Procédé selon la revendication 1, comprenant en outre le fait de compiler des indicateurs de données statistiques (S500, S520) à partir desdites contributions, lesdits indicateurs de données statistiques étant choisis parmi le groupe constitué par l'efficacité d'une demande sollicitant l'apport d'une contribution, les habitudes de contributions des donateurs, le nombre de donateurs apportant leurs contributions pendant un laps de temps et le montant des contributions collectées au cours du temps.

21. Procédé selon la revendication 1, dans lequel lesdits dispositifs éloignés d'acceptation de contributions comprennent des moyens d'entrée, lesdits moyens d'entrée étant choisis parmi le groupe constitué par un clavier (107) et un écran tactile (860), au moins un microprocesseur (530, 533, 536, 903) et un écran (840, 842), et comprenant en outre l'étape consistant à entrer des données de contributions dans ledit dispositif éloigné d'acceptation de contributions.

22. Procédé selon la revendication 1, dans lequel lesdits dispositifs éloignés d'acceptation de contributions comprennent des moyens d'entrée, lesdits moyens d'entrée étant choisis parmi le groupe constitué par un clavier et un écran tactile, au moins un microprocesseur et un écran, et ledit dispositif de gestion de contributions comprend plusieurs microprocesseurs et un écran, et comprenant en outre le fait d'entrer des données de contributions dans un dispositif éloigné d'acceptation de contributions (100).

23. Procédé selon la revendication 1, comprenant en outre le fait de présenter sur lesdits dispositifs éloignés d'acceptation de contributions des symboles représentant des opérateurs pour induire l'apport de contributions monétaires, lesdits symboles comprenant ladite demande concernant des données de contributions.

24. Procédé selon la revendication 1, comprenant en outre le fait de présenter des symboles représentant des valeurs monétaires d'un ordre induisant l'apport de préférences de contributions de donateurs, lesdites valeurs étant choisies parmi le groupe constitué essentiellement par $1, $5, $10, $15 et $N+$5 où N représente un entier et 15 ≤ N, lesdits symboles étant communiqués auxdits dispositifs d'acceptation de contributions dans ladite demande concernant des paquets de données de contributions.

25. Procédé selon la revendication 1, comprenant en outre le fait d'assembler des informations concernant une série de contributions d'un donateur respectif jusqu'à ce que lesdites contributions atteignent une valeur sélectionnée et traiter lesdites contributions une fois que ladite valeur sélectionnée a été atteinte.

26. Procédé selon la revendication 1, dans lequel ladite routine concernant l'acceptation d'au moins une contribution est une routine logicielle destinée à accepter des apports de contributions successifs, l'un après l'autre, en l'absence d'informations qui ne concernent pas lesdites contributions ou lesdits donateurs, et dans lequel ladite routine concernant la réception et l'enregistrement des contributions à partir d'au moins un dispositif d'acceptation de contributions est une routine logicielle destinée à accepter une multitude desdits apports de contributions successifs à partir desdits dispositifs éloignés d'acceptation de contributions.

27. Procédé selon la revendication 1, comprenant en outre le fait d'analyser par voie électronique des informations statistiques liées auxdites contributions.

28. Procédé selon la revendication 1, dans lequel lesdits dispositifs éloignés d'acceptation de contributions comprennent un clavier (107), un écran et un moyen pour saisir des informations à partir de cartes de crédits portant des enregistrements (145) ou de cartes de débits (150), et comprenant en outre l'étape consistant à entrer des données de contributions dans un dispositif éloigné d'acceptation de contributions.

29. Procédé selon la revendication 1, comprenant en outre le fait de prendre en compte les préférences de contributions de donateurs en présentant, sur lesdits dispositifs d'acceptation de contributions, une demande supplémentaire choisie parmi le groupe constitué par une demande concernant une contribution induisant l'apport de ladite contribution et une demande concernant l'apport d'une contribution à plusieurs causes différentes.

30. Procédé selon la revendication 1, dans lequel ladite demande comprend des demandes concernant l'entrée d'une contribution à plus d'une collecte pour laquelle lesdites contributions sont sollicitées ; désigner une collecte respective pour obtenir des données de collecte désignées ; et corréler lesdites données de collecte désignées avec une contribution respective désignée pour ladite collecte afin d'obtenir des données corrélées de collecte et de contribution ; et dans lequel lesdites données corrélées de contribution et de collecte sont reçues et enregistrées audit dispositif de gestion de contributions.

31. Procédé selon la revendication 1, dans lequel ladite demande comprend plusieurs demandes concernant l'apport de contributions à plusieurs collectes pour lesquelles lesdites contributions sont sollicitées, et comprenant en outre le fait de corréler des contributions respectives avec les collectes auxquelles elles sont désignées.

32. Procédé selon la revendication 1, comprenant en outre le fait de coder lesdites contributions auxdits dispositifs électroniques d'acceptation de contributions afin d'obtenir des contributions codées ; et décoder lesdites contributions codées à un dispositif autre que ledit dispositif électronique d'acceptation de contributions.

33. Procédé selon la revendication 1, comprenant en outre le fait de relier en communication lesdits dispositifs d'acceptation de contributions dans un réseau local d'entreprise.

34. Procédé selon la revendication 1, comprenant en outre le fait de pointer lesdites contributions, lesdites contributions étant choisies parmi le groupe comprenant des contributions entrées par des donateurs individuels respectifs et des contributions apportées par différents donateurs.

35. Procédé selon la revendication 1, comprenant en outre le fait de compiler un indicateur statistique à partir de plusieurs desdites contributions entrées dans lesdits dispositifs d'acceptation de contributions ; et cibler un donateur potentiel particulier avec une demande ultérieure concernant une contribution en fonction dudit indicateur statistique, ledit donateur potentiel étant choisi parmi le groupe constitué par un donateur particulier, un sous-groupe de donateurs et un groupe de donateurs manifestant une demande concernant une contribution, par lequel ladite entité est ciblée dans un effort pour maximiser les contributions globales.

36. Procédé selon la revendication 1, comprenant en outre le fait de quantifier de manière automatique des données apparentées à plusieurs desdites contributions entrées dans lesdits dispositifs d'acceptation de contributions afin d'obtenir un indicateur de jugement quantifié ; et modifier une demande ultérieure concernant une contribution en réponse audit indicateur de jugement quantifié.

37. Procédé selon la revendication 1, dans lequel lesdites contributions sont choisies parmi le groupe constitué par des offrandes volontaires et des dîmes.

38. Procédé selon la revendication 1, comprenant en outre le fait d'exécuter une session de contributions dans laquelle ladite demande concernant une contribution est affichée pendant une période de temps d'attente (S1511).

39. Procédé selon la revendication 1, comprenant en outre le fait d'exécuter une session de contributions afin d'obtenir des informations de session constituée essentiellement par des informations concernant les contributions et concernant des donateurs ; et effacer de manière périodique lesdites informations de session à partir d'un dispositif choisi parmi le groupe constitué par ledit dispositif de gestion de contributions et lesdits dispositifs d'acceptation de contributions.

40. Procédé selon la revendication 1, comprenant en outre le fait d'exécuter une session de contribution afin d'obtenir des informations de session, lesdites informations de session étant constituées par des informations concernant le donateur et par des informations concernant la contribution.

41. Procédé selon la revendication 1, comprenant en outre le fait de déterminer l'authenticité de ladite contribution.

42. Procédé selon la revendication 1, dans lequel ledit dispositif d'acceptation de contributions comprend en outre un associateur de dons (1340), et comprenant en outre le fait de corréler une contribution particulière avec un donateur particulier utilisant ledit associateur de dons.

43. Procédé selon la revendication 1, comprenant en outre le fait de regrouper plusieurs dispositifs respectifs de gestion de contributions avec des dispositifs d'acceptation de contributions, chacun desdits dispositifs de gestion de contributions communiquant avec au moins un dispositif respectif d'acceptation de contributions afin d'obtenir plusieurs systèmes groupés de collecte de contributions ; relier en communication lesdits systèmes de collecte groupés ; et partager des données de contributions entre lesdits systèmes de collecte groupés.

44. Procédé selon la revendication 1, dans lequel on met en oeuvre de multiples collectes pour lesquelles des contributions sont sollicitées au cours d'une session de contribution électronique, et comprenant en outre le fait de désigner la collecte spécifique à laquelle est désignée une contribution respective au cours de ladite session de contribution.

45. Procédé selon la revendication 1, comprenant en outre le fait de corréler des paquets de données de demande concernant une prière spécifique avec une contribution respective qui y est liée.

46. Procédé selon la revendication 1, comprenant en outre le fait de communiquer une multitude desdites contributions à partir de plusieurs dispositifs de gestion de contributions à une base de données centrale à des fins de traitement ultérieur, lesdits dispositifs de gestion de contributions étant situés à des organisations de collecte de fonds éloignées du point de vue géographique ou à des sites désignés par lesdites organisations de collecte de fonds.

47. Procédé selon la revendication 1, dans lequel lesdites contributions sont exemptes d'informations qui ne concernent pas lesdites contributions respectives.

48. Système informatisé pour des collectes de fonds interactives à travers un réseau d'ordinateurs transférant des paquets de données (140, 1030, 990), comprenant, en combinaison, plusieurs dispositifs d'acceptation de contributions (100) éloignés les uns des autres ; une routine (S1200) comprenant une demande concernant une contribution présentée sur plusieurs desdits dispositifs éloignés d'acceptation de contributions ; une ligne de communication (1030) reliant des dispositifs éloignés respectifs d'acceptation de contributions à un dispositif respectif de gestion de contributions ; et une routine (S1200) pour recevoir, audit dispositif de gestion de contributions, à partir de plusieurs desdits dispositifs éloignés d'acceptation de contributions, plusieurs contributions entrées dans lesdits dispositifs d'acceptation de contributions, ledit dispositif de gestion de contributions étant, le cas échéant, éloigné du point de vue géographique de plusieurs desdits dispositifs électroniques d'acceptation de contributions.

49. Système selon la revendication 48, dans lequel les contributions respectives sont exemptes d'informations qui ne concernent pas lesdites contributions respectives.

50. Système selon la revendication 48, dans lequel ladite demande concernant une contribution représente une demande concernant une contribution à plusieurs causes.

51. Système selon la revendication 48, comprenant en outre une routine qui établit une corrélation entre une contribution respective et une cause à laquelle est désignée ladite contribution respective afin d'obtenir des données de contributions corrélées, un générateur de fichiers (820, 830) disposé à distance de plusieurs desdits dispositifs d'acceptation de contributions, des composants de circuits de communication pour communiquer lesdites données de contributions corrélées audit générateur de fichiers, une routine pour générer un fichier audit générateur de fichiers, ledit fichier contenant au moins une partie desdites données de contributions corrélées, et des moyens pour transmettre ledit fichier à un destinataire dudit fichier.

52. Système selon la revendication 48, dans lequel ladite demande concernant une contribution représente une demande concernant une contribution apportée en mémoire ou en l'honneur d'un individu qui est décédé, et comprenant en outre une routine pour traiter ladite demande auxdits dispositifs d'acceptation de contributions pour mettre en oeuvre une présentation visuelle de ladite demande sur lesdits dispositifs d'acceptation de contributions.

53. Système selon la revendication 48, comprenant en outre une routine corrélant des contributions respectives avec des données concernant des bénéficiaires, lesdites données concernant des bénéficiaires étant choisies parmi le groupe constitué par un individu qui est décédé, un bénéficiaire unique d'une collecte et le bénéficiaire choisi parmi plusieurs bénéficiaires, afin d'obtenir des données corrélées concernant des bénéficiaires ; un dispositif de stockage temporaire pour stocker de manière temporaire des données corrélées respectives concernant des bénéficiaires à des dispositifs respectifs d'acceptation de contributions ; une routine de transfert pour transférer lesdites données corrélées concernant des bénéficiaires audit dispositif de gestion de contributions ; et une routine de traitement pour traiter lesdites données corrélées concernant des bénéficiaires.

54. Système selon la revendication 48, comprenant en outre un écran demandant des informations concernant un donateur, présenté sur lesdits dispositifs éloignés d'acceptation de contributions, une routine de saisie temporaire pour saisir de manière temporaire des informations respectives concernant des donateurs et concernant une contribution respective désignée par ledit donateur auxdits dispositifs d'acceptation de contributions, et une routine de transmission pour transmettre lesdites informations concernant des donateurs audit dispositif de gestion de contributions.

55. Système selon la revendication 48, comprenant en outre de multiples écrans de visualisation sollicitant l'entrée d'une contribution, présentés sur lesdits dispositifs d'acceptation de contributions.

56. Système selon la revendication 48, comprenant en outre une mémoire pour conserver de manière temporaire des informations concernant lesdites contributions auxdits dispositifs éloignés d'acceptation de contributions avant de communiquer lesdites contributions audit dispositif de gestion de contributions.

57. Système selon la revendication 48, comprenant en outre des composants de circuits de communication communiquant lesdites contributions à partir dudit dispositif de gestion de contributions à un dispositif de traitement de fonds à des fins de traitement ultérieur de ces derniers.

58. Système selon la revendication 48, comprenant en outre une routine de corrélation pour corréler une contribution respective à une cause désignée par ladite contribution respective afin d'obtenir des données de contributions corrélées à une cause ; une routine de communication communiquant lesdites données de contributions corrélées à une cause à un générateur de fichiers situé à distance d'un certain nombre desdits dispositifs d'acceptation de contributions ; ledit générateur de fichiers générant un fichier audit générateur de fichiers, ledit fichier reprenant au moins une partie desdites données de contributions corrélées à une cause ; et des moyens de transmission pour transmettre ledit fichier à un destinataire dudit fichier.

59. Système selon la revendication 48, comprenant en outre un dispositif de communication de message pour communiquer un message exprimant de la gratitude à un donateur respectif pour une contribution correspondante à partir d'un dispositif différent dudit dispositif éloigné respectif d'acceptation de contributions en réponse à une contribution entrée audit dispositif éloigné respectif d'acceptation de contributions.

60. Système selon la revendication 48, comprenant en outre un dispositif pour entrer par voie électronique des indications de signature de donateurs corrélées à une contribution respective afin d'obtenir des données corrélées de contribution et de signature ; une mémoire pour saisir de manière temporaire lesdites données corrélées d'indications de signature et de contribution auxdits dispositifs éloignés d'acceptation de contributions ; un dispositif de transmission pour générer des données de transmission à partir desdites données corrélées d'indications de signature et de contribution ; et des moyens de communication pour communiquer lesdites données de transmission audit dispositif de gestion de contributions.

61. Système selon la revendication 48, comprenant en outre une routine pour surveiller lesdites contributions entrées auxdits dispositifs éloignés d'acceptation de contributions en temps réel, par lequel on facilite le traçage des contributions réalisées à plusieurs sites de contributions distincts éloignés du point de vue géographique.

62. Système selon la revendication 48, comprenant en outre une routine pour ajouter des contributions supplémentaires à un total cumulé desdites contributions stockées à un dispositif électronique autre que ledit dispositif éloigné d'acceptation de contributions.

63. Système selon la revendication 48, dans lequel ladite demande concernant une contribution est une demande rédigée en plusieurs langues pour des données de contributions.

64. Système selon la revendication 48, dans lequel ladite demande concernant une contribution est une demande rédigée en plusieurs langues pour des données de contributions et comprenant en outre une routine pour communiquer ladite demande rédigée en plusieurs langues concernant des données de contributions, à partir dudit dispositif de gestion de contributions, auxdits dispositifs éloignés respectifs d'acceptation de contributions.

65. Système selon la revendication 48, comprenant en outre une routine pour corréler lesdites contributions avec des données de comptes respectives.

66. Système selon la revendication 48, comprenant en outre une routine corrélant une contribution respective avec une demande respective concernant des données de contributions, ladite demande concernant des données de contributions étant choisie parmi le groupe constitué par des données de prières, des données de supplications et des données de pétitions, afin d'obtenir une demande corrélée ; et une routine pour traiter ladite demande corrélée.

67. Système selon la revendication 48, comprenant en outre une routine pour déterminer par voie électronique le fait de savoir si plusieurs desdites contributions ont atteint un quota.

68. Système selon la revendication 48, comprenant en outre une routine pour corréler une contribution respective avec des données d'identité d'un donateur respectif apportant une contribution respective.

69. Système selon la revendication 48, comprenant en outre une routine pour corréler de manière automatique une contribution respective avec un compte d'un donateur respectif apportant une contribution respective.

70. Système selon la revendication 48, comprenant en outre une routine pour compiler des indicateurs de données statistiques à partir desdites contributions, lesdits indicateurs de données statistiques étant choisis parmi le groupe constitué par l'efficacité d'une demande sollicitant l'apport d'une contribution, les habitudes de contributions des donateurs, le nombre de donateurs apportant leurs contributions pendant un laps de temps et le montant des contributions collectées au cours du temps.

71. Système selon la revendication 48, dans lequel lesdits dispositifs éloignés d'acceptation de contributions comprennent des moyens d'entrée, lesdits moyens d'entrée étant choisis parmi le groupe constitué par un clavier et un écran tactile, au moins un microprocesseur et un écran.

72. Système selon la revendication 48, dans lequel lesdits dispositifs éloignés d'acceptation de contributions comprennent des moyens d'entrée, lesdits moyens d'entrée étant choisis parmi le groupe constitué par un clavier et un écran tactile, au moins un microprocesseur et un écran, et ledit dispositif de gestion de contributions comprend plusieurs microprocesseurs et un écran.

73. Système selon la revendication 48, comprenant en outre une routine présentant sur lesdits dispositifs éloignés d'acceptation de contributions des symboles représentant des opérateurs pour induire l'apport de contributions monétaires, lesdits symboles comprenant ladite demande concernant des données de contributions.

74. Système selon la revendication 48, comprenant en outre une routine présentant des symboles représentant des valeurs monétaires d'un ordre induisant l'apport de préférences de contributions de donateurs, lesdites valeurs étant choisies parmi le groupe constitué essentiellement par $1, $5, $10, $15 et $N+$5 où N représente un entier et 15 ≤ N, lesdits symboles étant communiqués auxdits dispositifs d'acceptation de contributions dans ladite demande concernant une contribution.

75. Système selon la revendication 48, comprenant en outre une routine pour assembler des informations concernant une série de contributions d'un donateur respectif jusqu'à ce que lesdites contributions atteignent une valeur sélectionnée et une routine pour traiter lesdites contributions une fois que ladite valeur sélectionnée a été atteinte.

76. Système selon la revendication 48, dans lequel ladite routine concernant l'acceptation d'au moins une contribution est une routine logicielle destinée à accepter des apports de contributions successifs, l'un après l'autre, en l'absence d'informations qui ne concernent pas lesdites contributions ou lesdits donateurs, et dans lequel ladite routine concernant la réception et l'enregistrement des contributions à partir d'au moins un dispositif d'acceptation de contributions est une routine logicielle destinée à accepter une multitude desdits apports de contributions successifs à partir desdits dispositifs éloignés d'acceptation de contributions.

77. Système selon la revendication 48, comprenant en outre une routine pour analyser par voie électronique des informations statistiques liées auxdites contributions.

78. Système selon la revendication 48, dans lequel lesdits dispositifs éloignés d'acceptation de contributions comprennent un clavier, un écran et un moyen pour saisir des informations à partir de cartes de crédits portant des enregistrements ou de cartes de débits.

79. Système selon la revendication 48, comprenant en outre une routine pour prendre en compte les préférences de contributions de donateurs en présentant, sur lesdits dispositifs d'acceptation de contributions, une demande supplémentaire choisie parmi le groupe constitué par une demande concernant une contribution induisant l'apport de ladite contribution et une demande concernant l'apport d'une contribution à plusieurs causes différentes.

80. Système selon la revendication 48, dans lequel ladite demande comprend des demandes concernant l'entrée d'une contribution à plus d'une collecte pour laquelle lesdites contributions sont sollicitées ; une routine pour désigner une collecte respective pour obtenir des données de collecte désignées ; et une routine pour corréler lesdites données de collecte désignées avec une contribution respective désignée pour ladite collecte afin d'obtenir des données corrélées de collecte et de contribution ; et dans lequel lesdites données corrélées de contribution et de collecte sont reçues et enregistrées audit dispositif de gestion de contributions.

81. Système selon la revendication 48, dans lequel ladite demande comprend plusieurs demandes concernant l'apport de contributions à plusieurs collectes pour lesquelles lesdites contributions sont sollicitées, et comprenant en outre une routine pour corréler des contributions respectives avec les collectes auxquelles elles sont désignées.

82. Système selon la revendication 48, comprenant en outre une routine pour coder lesdites contributions auxdits dispositifs électroniques d'acceptation de contributions afin d'obtenir des contributions codées ; et une routine pour décoder lesdites contributions codées à un dispositif autre que ledit dispositif électronique d'acceptation de contributions.

83. Système selon la revendication 48, comprenant en outre une routine pour relier en communication lesdits dispositifs d'acceptation de contributions dans un réseau local d'entreprise.

84. Système selon la revendication 48, comprenant en outre une routine pour pointer lesdites contributions, lesdites contributions étant choisies parmi le groupe comprenant des contributions entrées par des donateurs individuels respectifs et des contributions apportées par différents donateurs.

85. Système selon la revendication 48, comprenant en outre une routine pour compiler un indicateur statistique à partir de plusieurs desdites contributions entrées dans lesdits dispositifs d'acceptation de contributions ; et une routine pour cibler un donateur potentiel particulier avec une demande ultérieure concernant une contribution en fonction dudit indicateur statistique, ledit donateur potentiel étant choisi parmi le groupe constitué par un donateur particulier, un sous-groupe de donateurs et un groupe de donateurs manifestant une demande concernant une contribution, par lequel ladite entité est ciblée dans un effort pour maximiser les contributions globales.

86. Système selon la revendication 48, comprenant en outre une routine pour quantifier de manière automatique des données apparentées à plusieurs desdites contributions entrées dans lesdits dispositifs d'acceptation de contributions afin d'obtenir un indicateur de jugement quantifié ; et une routine pour modifier une demande ultérieure concernant une contribution en réponse audit indicateur de jugement quantifié.

87. Système selon la revendication 48, dans lequel lesdites contributions sont choisies parmi le groupe constitué par des offrandes volontaires et des dîmes.

88. Système selon la revendication 48, comprenant en outre une routine pour exécuter une session de contributions dans laquelle ladite demande concernant une contribution est affichée pendant une période de temps d'attente.

89. Système selon la revendication 48, comprenant en outre une routine exécutant une session de contributions afin d'obtenir des informations de session constituée essentiellement par des informations concernant les contributions et concernant des donateurs ; et une routine pour effacer de manière périodique lesdites informations de session à partir d'un dispositif choisi parmi le groupe constitué par ledit dispositif de gestion de contributions et lesdits dispositifs d'acceptation de contributions.

90. Système selon la revendication 48, comprenant en outre une routine pour exécuter une session de contribution afin d'obtenir des informations de session, lesdites informations de session étant constituées par des informations concernant le donateur et par des informations concernant la contribution.

91. Système selon la revendication 48, comprenant en outre une routine pour déterminer l'authenticité de ladite contribution.

92. Système selon la revendication 48, dans lequel ledit dispositif d'acceptation de contributions comprend en outre un associateur de dons, et comprenant en outre une routine pour corréler une contribution particulière avec un donateur particulier utilisant ledit associateur de dons.

93. Système selon la revendication 48, comprenant en outre une routine pour présenter de multiples collectes pour lesquelles des contributions sont sollicitées au cours d'une session de contribution électronique, et comprenant en outre une routine pour désigner la collecte spécifique à laquelle est désignée une contribution respective au cours de ladite session de contribution.

94. Système selon la revendication 48, comprenant en outre une routine pour corréler des données de demande concernant une prière spécifique avec une contribution respective qui y est liée.

95. Système selon la revendication 48, comprenant en outre une routine pour communiquer une multitude de desdites contributions à partir de plusieurs dispositifs de gestion de contributions à une base de données centrale à des fins de traitement ultérieur, lesdits dispositifs de gestion de contributions étant situés à des organisations de collecte de fonds éloignées du point de vue géographique ou à des sites désignés par lesdites organisations de collecte de fonds.
